(19) **Europäisches Patentamt / European Patent Office / Office européen des brevets**

(11) **EP 2 884 678 B1**

(12) # EUROPEAN PATENT SPECIFICATION

(45) Date of publication and mention of the grant of the patent:
**02.10.2019 Bulletin 2019/40**

(21) Application number: **13879384.9**

(22) Date of filing: **12.08.2013**

(51) Int Cl.:
*H04L 1/00* (2006.01)     *H04B 7/26* (2006.01)
*H04J 11/00* (2006.01)

(86) International application number:
**PCT/KR2013/007249**

(87) International publication number:
**WO 2014/027810 (20.02.2014 Gazette 2014/08)**

(54) **METHOD FOR RECEIVING DOWN-LINK CONTROL CHANNEL IN WIRELESS COMMUNICATION SYSTEM**

VERFAHREN FÜR DEN EMPFANG EINES DOWNLINK-STEUERKANALS IN EINEM DRAHTLOSEN KOMMUNIKATIONSSYSTEM

PROCÉDÉ DE RÉCEPTION DE CANAL DE COMMANDE DE LIAISON DESCENDANTE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2012   US 201261682208 P**
**05.10.2012   US 201261709994 P**
**06.10.2012   US 201261710679 P**
**06.10.2012   US 201261710686 P**
**10.10.2012   US 201261712212 P**

(43) Date of publication of application:
**17.06.2015   Bulletin 2015/25**

(73) Proprietor: **LG Electronics Inc.**
**Seoul 07336 (KR)**

(72) Inventors:
• **LEE, Seungmin**
  **Anyang-si**
  **Gyeonggi-do 431-080 (KR)**
• **KIM, Hakseong**
  **Anyang-si**
  **Gyeonggi-do 431-080 (KR)**
• **SEO, Hanbyul**
  **Anyang-si**
  **Gyeonggi-do 431-080 (KR)**

(74) Representative: **Cabinet Plasseraud**
**66, rue de la Chaussée d'Antin**
**75440 Paris Cedex 09 (FR)**

(56) References cited:
**WO-A1-2012/065727     WO-A1-2012/109542**

• **LG ELECTRONICS: "E-PDCCH Search Space Configuration", 3GPP DRAFT; R1-121455, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599737,**
• **HTC: "Discussion on ePDCCH Search Space Design", 3GPP DRAFT; R1-123600, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 5 August 2012 (2012-08-05), XP050661476, Retrieved from the Internet: URL:http://www.3gpp.org/ftp/tsg_ran/WG1_RL 1/TSGR1_70/Docs/ [retrieved on 2012-08-05]**

- ALCATEL-LUCENT SHANGHAI BELL ET AL: "ePDCCH search space design and aggregation levels", 3GPP DRAFT; R1-123150 EPDCCH SEARCH SPACE DESIGN AND AGGREGATION LEVELS-FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Qingdao, China; 20120813 - 20120817 5 August 2012 (2012-08-05), XP050661042, Retrieved from the Internet: URL:http://www.3gpp.org/ftp/tsg_ran/WG1_RL 1/TSGR1_70/Docs/ [retrieved on 2012-08-05]
- 'DISCUSSION ON EPDCCH CANDIDATES DESIGN' 3GPP TSG RAN WG1 MEETING 69 21 May 2012, PRAGUE CZECH REPUBLIC, pages 1 - 3, XP050601116 Retrieved from the Internet: <URL:WWW.3GPP.ORG/FTP/TSG_RAN/WG1>
- HUAWEI ET AL: 'UE SPECIFIC SEARCH SPACE FOR EPDCCH' 3GPP TSG RAN WG1 MEETING 68 122106 26 March 2012, XP050599309 Retrieved from the Internet: <URL:WWW.3GPP.ORG/FTP/TSG_RAN/WG1>
- CATT: 'CONSIDERATIONS ON E-PDCCH SEARCH SPACE DESIGN 121102' 3GPP TSG RAN WG1 MEETING 68 26 March 2012, XP050599405 Retrieved from the Internet: <URL:WWW.3GPP.ORG/FTP/TSG_RAN/WG1>

## Description

[Technical Field]

The present invention relates to a wireless communication system, and more particularly, to a method and device for receiving a downlink control channel at a user equipment (UE) in a wireless communication system.

[Background Art]

As an example of a mobile communication system to which the present invention is applicable, a 3rd generation partnership project long term evolution (3GPP LTE) (hereinafter, referred to as LTE) communication system is described in brief.

Background information on related technology is given in (1) "E-PDCCH Search Space Configuration", 3GPP Draft; R1-121455, LG Electronics, (2) "Discussion on ePDCCH Search Space Design", 3GPP Draft; R1-123600, HTC, and (3) "ePDCCH search space design and aggregation levels", 3GPP Draft; R1-123150 Alcatel-Lucent Shanghai Bell, et al. WO 2012/109542, filed on 10.02.2012 and published on 16.08.2012, relates to systems and methods for an enhanced control channel.

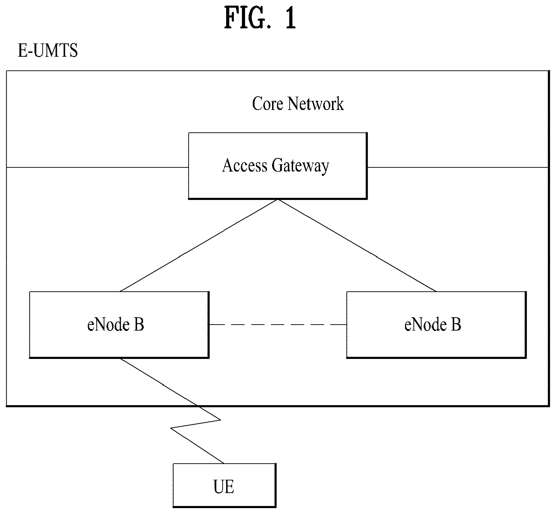

FIG. 1 is a diagram schematically illustrating a network structure of an E-UMTS as an exemplary radio communication system. An evolved universal mobile telecommunications system (E-UMTS) is an advanced version of a legacy universal mobile telecommunications system (UMTS) and basic standardization thereof is currently underway in the 3GPP. E-UMTS may be referred to as an LTE system. For details of the technical specifications of UMTS and E-UMTS, reference can be made to Release 7 and Release 8 of "3rd Generation Partnership Project; Technical Specification Group Radio Access Network".

Referring to FIG. 1, E-UMTS includes a user equipment (UE), evolved Node Bs (eNode Bs or eNBs), and an access gateway (AG) which is located at an end of an evolved UMTS terrestrial radio access network (E-UTRAN) and connected to an external network. The eNBs may simultaneously transmit multiple data streams for a broadcast service, a multicast service, and/or a unicast service.

One or more cells are present per eNB. A cell is configured to use one of bandwidths of 1.44, 3, 5, 10, 15, and 20 MHz to provide a downlink (DL) or uplink (UL) transmission service to multiple UEs. Different cells may be configured to provide different bandwidths. The eNB controls data transmission and reception to and from a plurality of UEs. Regarding DL data, the eNB transmits DL scheduling information to notify a corresponding UE of a time/frequency domain within which data is to be transmitted, coding, data size, and hybrid automatic repeat and request (HARQ)-related information. In addition, regarding UL data, the eNB transmits UL scheduling information to a corresponding UE to inform the UE of an available time/frequency domain, coding, data size, and HARQ-related information. An interface for transmitting user traffic or control traffic between eNBs may be used. A core network (CN) may include the AG and a network node for user registration of the UE. The AG manages mobility of the UE on a tracking area (TA) basis, each TA including a plurality of cells.

Although radio communication technology has been developed up to LTE based on wideband code division multiple access (WCDMA), demands and expectations of users and providers continue to increase. In addition, since other radio access technologies continue to be developed, new advances in technology are required to secure future competitiveness. For example, decrease of cost per bit, increase of service availability, flexible use of a frequency band, simplified structure, open interface, appropriate power consumption of a UE, etc. are required.

[Disclosure]

[Technical Problem]

An object of the present invention is to provide a method and device for receiving a downlink control channel at a user equipment (UE) in a wireless communication system.

It is to be understood that technical objects to be achieved by the present invention are not limited to the aforementioned technical object and other technical objects which are not mentioned herein will be apparent from the following description to one of ordinary skill in the art to which the present invention pertains.

[Technical Solution]

The object of the present invention can be achieved by providing a method for detecting downlink control information at a user equipment (UE) in a wireless communication system, as defined in claim 1. The method includes receiving aggregation level-related information for monitoring an enhanced physical downlink control channel (EPDCCH), and monitoring a search space for the EPDCCH according to a specific aggregation level and detecting the downlink control information, wherein the number of EPDCCH candidates for detecting the downlink control information on the specific aggregation level is differently defined according to the aggregation level-related information.

The aggregation level-related information may include at least one of a downlink control information (DCI) format type, a system bandwidth, the number of resource elements (REs) available for EPDCCH transmission, the number of physical resource block (PRB) pairs constituting an EPDCCH set, and EPDCCH transmission type information.

When the number of REs is smaller than a threshold, the number of EPDCCH candidates may be defined to be greater than when the number of REs is greater than or equal to the threshold.

The number of EPDCCH candidates defined when the number of REs is less than the threshold may be defined to be twice the number of EPDCCH candidates defined when the number of REs is greater than or equal to the threshold.

The specific aggregation level may correspond to one of first aggregation levels and second aggregation levels, the first aggregation levels and the second aggregation levels being defined according to the aggregation level-related information, wherein a lowest aggregation of the first aggregation levels may be higher than a lowest aggregation level of the second aggregation levels.

The lowest aggregation of the first aggregation levels may be twice the lowest aggregation level of the second aggregation levels.

The first aggregation levels and the second aggregation levels may be respective configured by a combination of at least one aggregation level selected from aggregation levels configured as {1, 2, 4, 8, 16, 32}.

The number of the first aggregation levels may be equal to the number of the second aggregation levels.

The specific aggregation level may correspond to one of third aggregation levels defined according to the aggregation level-related information, wherein the number of EPDCCH candidates defined by the third aggregation levels may be allocated such that a part of the number of EPDCCH candidates for an aggregation level having a lowest value among the third aggregation levels is reallocated to the remaining aggregation levels of the third aggregation levels.

When a plurality of resource units is allocated for the EPDCCH, the number of EPDCCH candidates for detecting the downlink control information may be independently defined for each of the resource units on the specific aggregation level according to the aggregation level-related information.

Also disclosed herein is a method for detecting downlink control information at a user equipment (UE) in a wireless communication system, the method including receiving information about a plurality of subframe patterns, and detecting the downlink control information over one of a physical downlink control channel (PDCCH) and an enhanced physical downlink control channel (EPDCCH) according to the multiple subframe patterns, wherein the plurality of subframe patterns indicates a subframe for detecting the PDCCH.

The plurality of subframe patterns may indicate a subframe for detecting the downlink control information over the PDCCH, by using at least one of a bitmap, a predetermined periodicity and an offset.

Also disclosed herein is a method for detecting downlink control information at a user equipment (UE) in a wireless communication system, the method including constructing a search space for monitoring an enhanced physical downlink channel (EPDCCH), and monitoring the search space according to aggregation levels configured for the UE and detecting the downlink control information, wherein each of the aggregation levels defines the number of EPDCCH candidates determined based on the number of resource units for the search space.

A weighting factor configured for a corresponding aggregation level between the aggregation levels may be applied to the number of EPDCCH candidates.

Also disclosed herein is a method for detecting downlink control information at a user equipment (UE) in a wireless communication system, the method including constructing a search space for monitoring an enhanced physical downlink channel (EPDCCH), and monitoring the search space according to aggregation levels configured for the UE and detecting the downlink control information, wherein each of the aggregation levels defines the number of EPDCCH candidates with a weight for an EPDCCH set related to the downlink control information applied thereto.

[Advantageous Effects]

According to embodiments of the present invention, downlink control information may be effectively detected in a wireless communication system.

It will be appreciated by those skilled in the art that the effects that can be achieved with the present invention are not limited to what has been described above and other advantages of the present invention will be clearly understood from the following detailed description taken in conjunction with the accompanying drawings.

[Description of Drawings]

The accompanying drawings, which are included to provide a further understanding of the invention, illustrate embodiments of the invention and together with the description serve to explain the invention.

FIG. 1 illustrates an E-UMTS network structure, which is an example of a wireless communication system.

FIG. 2 illustrates structures of a control plane of a radio interface protocol and a user plane between a UE and an E-UTRAN based on the 3GPP radio access network standard.

FIG. 3 is a diagram illustrating physical channels used for the 3GPP LTE system and a typical method for transmitting signals using the same.

FIG. 4 illustrates a structure of a radio frame in 3GPP LTE.

FIG. 5 is a diagram illustrating a resource grid for a downlink (DL) slot.

FIG. 6 illustrates a structure of a DL subframe.

FIG. 7 illustrates resource units used in configuring a downlink control channel in LTE.

FIG. 8 illustrates an example of an EPDCCH and PDSCHs scheduled by the EPDCCH.

FIG. 9 illustrates a method for determining the number of EPDCCH candidates according to one embodiment of the present invention.

FIG. 10 illustrates a method for monitoring EPDCCH candidates according to one embodiment of the present invention.

FIG. 11 illustrates a BS and a UE which are applicable to one embodiment of the present invention.

[Best Mode]

The following technology may be applied to a variety of wireless access systems using code division multiple access (CDMA), frequency division multiple access (FDMA), time division multiple access (TDMA), orthogonal frequency division multiple access (OFDMA), single carrier frequency division multiple access (SC-FDMA), and the like. CDMA may be embodied through radio technology such as universal terrestrial radio access (UTRA) or CDMA2000. TDMA may be embodied through radio technology such as global system for mobile communications (GSM)/general packet radio service (GPRS)/enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802-20, and evolved UTRA (E-UTRA). UTRA is a part of a universal mobile telecommunications system (UMTS). 3GPP LTE is a part of evolved UMTS (E-UMTS) using E-UTRA. 3GPP LTE employs OFDMA in DL and SC-FDMA in UL. LTE-advanced (LTE-A) is an evolved version of 3GPP LTE.

For clarity of description, the following description focuses on the 3GPP LTE/LTE-A system. However, the technical features of the present invention are not limited thereto. Specific terms used in the following description are provided to aid in understanding the present invention. These specific terms may be replaced with other terms within the scope of the present invention.

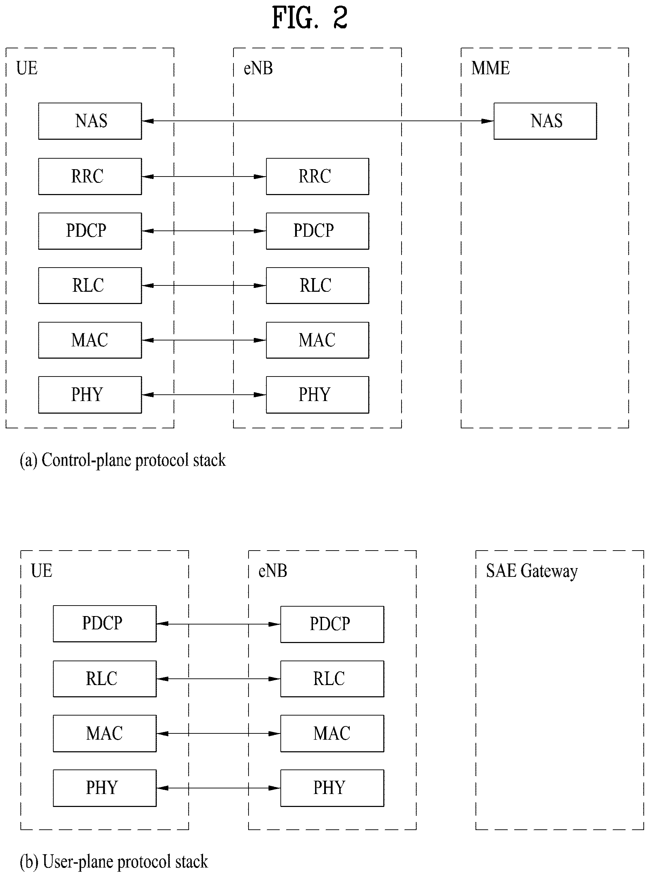

FIG. 2 is a diagram illustrating structures of a control plane and a user plane of a radio interface protocol between a UE and an E-UTRAN based on 3GPP radio access network specifications. The control plane refers to a path used for transmission of control messages, which is used by the UE and the network to manage a call. The user plane refers to a path in which data generated in an application layer, e.g. voice data or Internet packet data, is transmitted.

A physical layer, which is a first layer, provides an information transfer service to an upper layer using a physical channel. The physical layer is connected to a media access control (MAC) layer of an upper layer via a transmission channel (an antenna port channel). Data is transmitted between the MAC layer and the physical layer via the transmission channel. Data is also transmitted between a physical layer of a transmitter and a physical layer of a receiver via a physical channel. The physical channel uses time and frequency as radio resources. Specifically, the physical channel is modulated using an OFDMA scheme in DL and is modulated using an SC-FDMA scheme in UL.

The MAC layer, which is a second layer, provides a service to a radio link control (RLC) layer of an upper layer via a logical channel. The RLC layer of the second layer supports reliable data transmission. The function of the RLC layer may be implemented by a functional block within the MAC layer. A packet data convergence protocol (PDCP) layer of the second layer performs a header compression function to reduce unnecessary control information for efficient transmission of an Internet protocol (IP) packet such as an IPv4 or IPv6 packet in a radio interface having a relatively narrow bandwidth.

A radio resource control (RRC) layer located at the bottommost portion of a third layer is defined only in the control plane. The RRC layer controls logical channels, transmission channels, and physical channels in relation to configuration, re-configuration, and release of radio bearers. A radio bearer refers to a service provided by the second layer to transmit data between the UE and the network. To this end, the RRC layer of the UE and the RRC layer of the network exchange RRC messages. The UE is in an RRC connected mode if an RRC connection has been established between the RRC layer of the radio network and the RRC layer of the UE. Otherwise, the UE is in an RRC idle mode. A non-access stratum (NAS) layer located at an upper level of the RRC layer performs functions such as session management and mobility management.

One cell constituting an eNB is configured to use one of bandwidths of 1.4, 3, 5, 10, and 20 MHz to provide a DL or UL transmission service to a plurality of UEs. Different cells may be configured to provide different bandwidths.

DL transmission channels for data transmission from the network to the UE include a broadcast channel (BCH) for transmitting system information, a paging channel (PCH) for transmitting paging messages, and a DL shared channel (SCH) for transmitting user traffic or control messages. Traffic or control messages of a DL multicast or broadcast service may be transmitted through the DL SCH or may be transmitted through an additional DL multicast channel (MCH). Meanwhile, UL transmission channels for data transmission from the UE to the network include a random access channel (RACH) for transmitting initial control messages and a UL SCH for transmitting user traffic or control messages. Logical channels, which are located at an upper level of the transmission channels and are mapped to the transmission channels, include a broadcast control channel (BCCH), a paging control channel (PCCH), a common control channel (CCCH), a multicast control channel (MCCH), and a multicast traffic channel (MTCH).

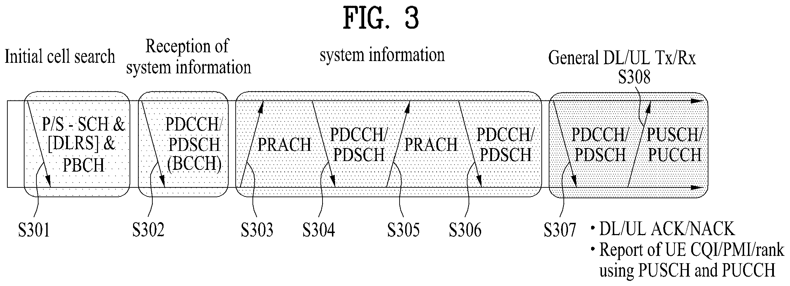

FIG. 3 is a diagram illustrating physical channels used in a 3GPP system and a general signal transmission method using the same.

When a UE is powered on or enters a new cell, the UE performs initial cell search such as synchronization acquisition with an eNB in step S301. To this end, the UE may receive a primary synchronization channel (P-SCH) and a secondary synchronization channel (S-SCH) from the eNB, establish synchronization with the eNB, and acquire information such as a cell identity (ID). Thereafter, the UE may receive a physical broadcast channel (PBCH) from the eNB to acquire information broadcast in the cell. Meanwhile, the UE may receive a DL reference signal (RS) in the initial cell search step to confirm a DL channel state.

Upon completion of initial cell search, the UE may receive a physical downlink control channel (PDCCH) and a physical downlink shared channel (PDSCH) according to information included in the PDCCH to acquire more detailed system information in step S302.

Next, the UE may perform a random access procedure such as steps S303 to S306 to complete access to the eNB. To this end, the UE may transmit a preamble through a physical random access channel (PRACH) (S303) and receive a response message to the preamble through the PDCCH and the PDSCH corresponding to the PDCCH (S304). In the case of contention-based random access, a contention resolution procedure including transmission of a PRACH signal (S305) and reception of a PDCCH signal and a PDSCH signal corresponding to the PDCCH signal (S306) may be additionally performed.

The UE which has performed the above procedures may receive a PDCCH and/or PDSCH signal (step S307) and transmit a physical uplink shared channel (PUSCH) and/or physical uplink control channel (PUCCH) signal (step S308) according to a general UL/DL signal transmission procedure. Control information that the UE transmits to the eNB is referred to as uplink control information (UCI). The UCI includes a hybrid automatic repeat and request (HARQ) acknowledgement (ACK)/negative ACK (NACK), a scheduling request (SR), channel state information (CSI), etc. In the present disclosure, HARQ ACK/NACK is shortened to HARQ-ACK or ACK/NACK (A/N). HARQ-ACK includes at least one of positive ACK (simply, ACK), negative ACK (simply, NACK), discontinuous transmission (DTX), and NACK/DTX. The CSI includes a channel quality indicator (CQI), a precoding matrix index (PMI), a rank indicator (RI), etc. While UCI is generally transmitted on a PUCCH, if control information and traffic data are to be transmitted simultaneously, the UCI may be transmitted on a PUSCH. The UCI may be transmitted aperiodically on the PUSCH upon request/command of a network.

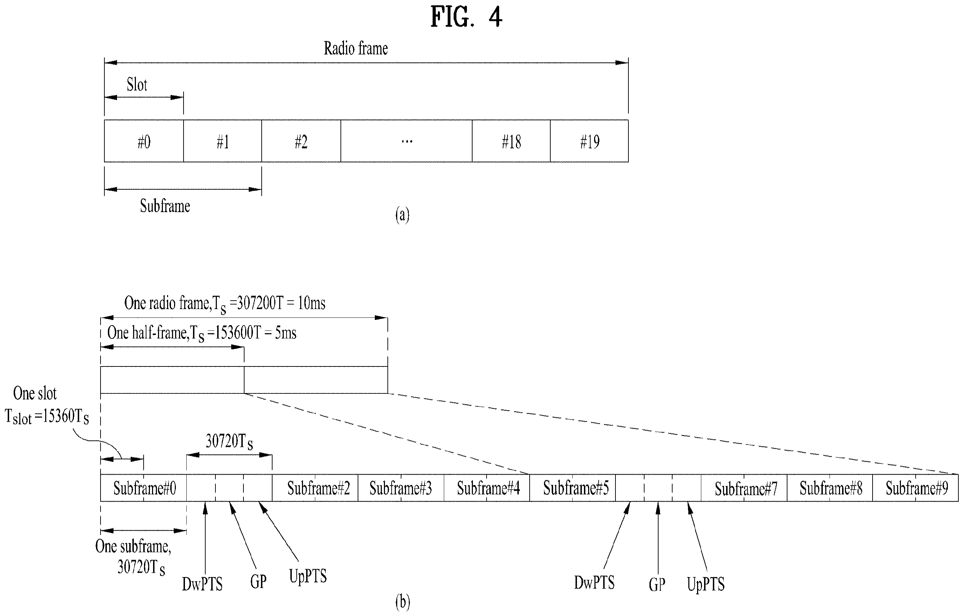

FIG. 4 is a diagram illustrating the structure of a radio frame used in an LTE system.

Referring to FIG. 4, in a cellular orthogonal frequency division multiplexing (OFDM) wireless packet communication system, UL/DL data packets are transmitted in sub frames. One sub frame is defined as a predetermined time interval including a plurality of OFDM symbols. The 3GPP LTE standard supports a type 1 radio frame structure applicable to frequency division duplex (FDD) and a type 2 radio frame structure applicable to time division duplex (TDD).

FIG. 4(a) is a diagram illustrating the structure of the type 1 radio frame. A DL radio frame includes 10 subframes, each subframe including two slots in the time domain. A time required to transmit one subframe is defined as a Transmission Time Interval (TTI). For example, one subframe may be 1ms long and one slot may be 0.5ms long. One slot includes a plurality of OFDM symbols in the time domain and a plurality of resource blocks (RBs) in the frequency domain. Since 3GPP LTE uses OFDMA for DL, an OFDM symbol is one symbol period. The OFDM symbol may be called an SC-FDMA symbol or symbol period. An RB is a resource allocation unit including a plurality of contiguous subcarriers in one slot.

The number of OFDM symbols included in one slot may be changed according to the configuration of a cyclic prefix (CP). There are two types of CPs, extended CP and normal CP. For example, if each OFDM symbol is configured to include a normal CP, one slot may include 7 OFDM symbols. If each OFDM symbol is configured to include an extended CP, the length of an OFDM symbol is increased and thus the number of OFDM symbols included in one slot is less than that in the case of a normal CP. In the case of the extended CP, for example, one slot may include 6 OFDM symbols. If a channel state is unstable, as is the case when the UE rapidly moves, the extended CP may be used in order to further reduce inter-symbol interference.

In the case of the normal CP, since one slot includes 7 OFDM symbols, one subframe includes 14 OFDM symbols. Up to first three OFDM symbols of each subframe may be allocated to a PDCCH and the remaining OFDM symbols may be allocated to a PDSCH.

FIG. 4(b) illustrates the structure of the type 2 radio frame. The type 2 radio frame includes two half frames, each half frame including four general subframes each having two slots and one special subframe including a downlink pilot time slot (DwPTS), a guard period (GP), and an uplink pilot time slot (UpPTS).

In the special subframe, the DwPTS is used for initial cell search, synchronization, or channel estimation at a UE, and the UpPTS is used for channel estimation and UL transmission synchronization with a UE at an eNB. That is, the DwPTS is used for DL transmission and the UpPTS is used for UL transmission. Particularly, the UpPTS is used for transmission of a PRACH preamble or a sounding reference signal (SRS). The GP is used to cancel UL interference between UL and DL, caused by multi-path delay of a DL signal.

The current 3GPP standard specification defines the following configurations listed in Table 1 below for the special subframe. Table 1 illustrates DwPTSs and UpPTSs in the case where $T_s$=1/(15000x2048). The remaining region except for a DwPTS and an UpPTS is set as a GP.

TABLE 1

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | | |
| 5 | $6592 \cdot T_s$ | $4384 \cdot T_s$ | $5120 \cdot T_s$ | $20480 \cdot T_s$ | $4384 \cdot T_s$ | $5120 \cdot T_s$ |
| 6 | $19760 \cdot T_s$ | | | $23040 \cdot T_s$ | | |
| 7 | $21952 \cdot T_s$ | | | $12800 \cdot T_s$ | | |
| 8 | $24144 \cdot T_s$ | | | - | - | - |
| 9 | $13168 \cdot T_s$ | | | - | - | - |

Meanwhile, the type 2 radio frame structure, that is, UL/DL subframe configurations in a TDD system are listed in Table 2.

TABLE 2

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In Table 2, D represents a DL subframe, U represents a UL subframe, and S represents a special subframe. Table 2 further illustrates DL-to-UL switch point periodicities for the respective UL/DL subframe configurations in the system.

The above-described structures of radio frames are purely exemplary. Accordingly, the number of subframes in a radio frame, the number of slots in a subframe, and the number of symbols in a slot may be changed in various manners.

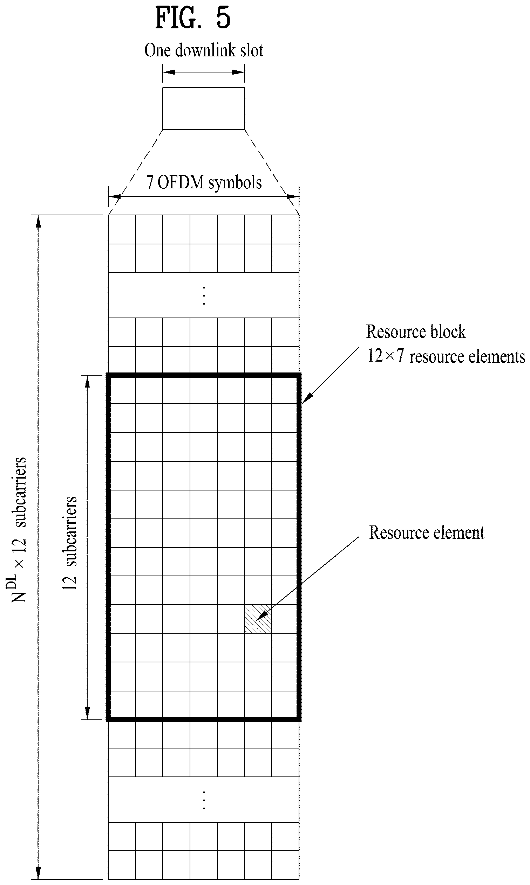

FIG. 5 illustrates a resource grid of a DL slot.

Referring to FIG. 5, a DL slot includes $N_{symb}^{DL}$ OFDM symbols in the time domain and $N_{RB}^{DL}$ RBs in the frequency domain. Each RB includes $N_{sc}^{RB}$ subcarriers and thus the DL slot includes $N_{RB}^{DL} \times N_{sc}^{RB}$ subcarriers in the frequency domain. Although FIG. 5 illustrates the case in which a DL slot includes 7 OFDM symbols and an RB includes 12 subcarriers, the present invention is not limited thereto. For example, the number of OFDM symbols included in the DL slot may differ according to CP length.

Each element on the resource grid is referred to as a resource element (RE). One RE indicated by one OFDM symbol index and one subcarrier index. One RB includes $N_{symb}^{DL} \times N_{sc}^{RB}$ REs. The number of RBs, $N_{RB}^{DL}$, included in a DL slot depends on DL bandwidth configured in a cell.

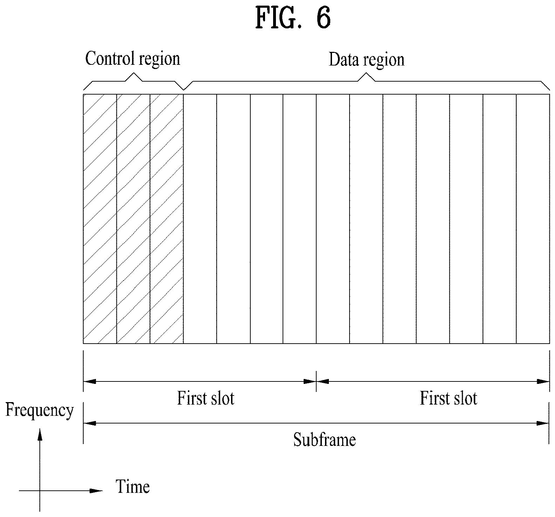

FIG. 6 illustrates the structure of a DL subframe.

Referring to FIG. 6, up to three or four OFDM symbols at the start of the first slot of a DL subframe are used as a control region to which control channels are allocated and the other OFDM symbols of the DL subframe are used as a data region to which a PDSCH is allocated. DL control channels defined for the LTE system include a physical control format indicator channel (PCFICH), a physical downlink control channel (PDCCH), and a physical hybrid ARQ indicator channel (PHICH). The PCFICH is transmitted in the first OFDM symbol of a subframe, carrying information about the number of OFDM symbols used for transmission of control channels in the subframe. The PHICH delivers a HARQ ACK/NACK signal as a response to UL transmission.

Control information carried on the PDCCH is called downlink control information (DCI). The DCI transports resource allocation information and other control information for a UE or a UE group. For example, the DCI includes DL/UL scheduling information, UL transmit (Tx) power control commands, etc.

The PDCCH delivers information about resource allocation and a transport format for a downlink shared channel (DL-SCH), information about resource allocation and a transport format for an uplink shared channel (UL-SCH), paging information of a paging channel (PCH), system information on the DL-SCH, information about resource allocation for a higher-layer control message such as a random access response transmitted on the PDSCH, a set of transmit power control commands for individual UEs of a UE group, transmit power control commands, voice over Internet protocol (VoIP) activation indication information, etc. A plurality of PDCCHs may be transmitted in the control region. A UE may monitor a plurality of PDCCHs. A PDCCH is transmitted on an aggregate of one or more consecutive control channel elements (CCEs). A CCE is a logical allocation unit used to provide a PDCCH at a coding rate based on the state of a radio channel. A CCE includes a plurality of resource element groups (REGs). The format of a PDCCH and the number of available bits for the PDCCH are determined according to the number of CCEs. An eNB determines a PDCCH format according to DCI transmitted to a UE and attaches a cyclic redundancy check (CRC) to control information. The CRC is masked by an identifier (ID) (e.g. a radio network temporary identifier (RNTI)) according to the owner or use of the PDCCH. If the PDCCH is destined for a specific UE, the CRC may be masked by a cell-RNTI (C-RNTI) of the UE. If the PDCCH carries a paging message, the CRC thereof may be masked by a paging ID (P-RNTI). If the PDCCH carries system information (particularly, a system information block (SIB)), the CRC thereof may be masked by a system information RNTI (SI-RNTI). If the PDCCH is designated as a random access response, the CRC thereof may be masked by a random access-RNTI (RA-RNTI).

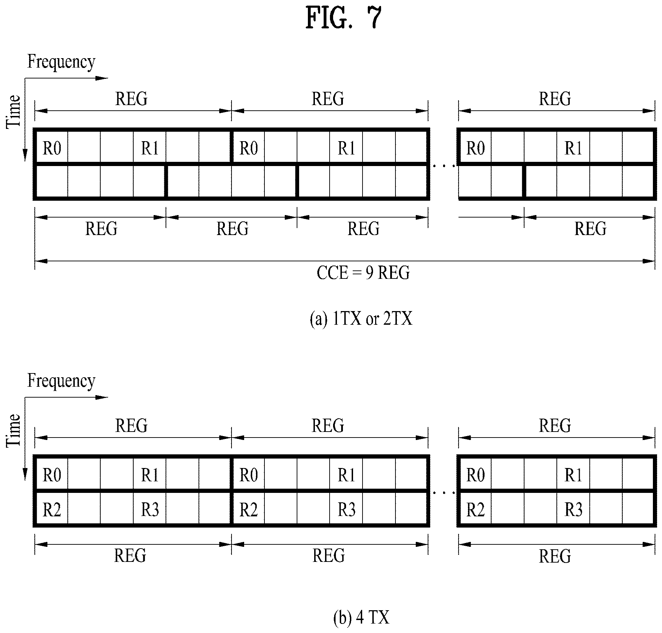

FIG. 7 illustrates resource units used in configuring a downlink control channel in LTE. In particular, FIG. 7(a) illustrates a case in which the eNB has one or two transmit antennas, and FIG. 7(b) illustrates a case in which the eNB has four transmit antennas. A different reference signal (RS) pattern is given according to the number of transmit antennas, but the same method of configuring resource units related to a control channel is used regardless of the number of transmit antennas.

Referring to FIG. 7, the basic resource unit for the downlink control channel is a resource element group (REG). An REG includes four REs neighboring each other with the RS excluded. The REGs are indicated by a thick line in the figure. The PCFICH includes four REGs and the PHICH includes three REGs. The PDCCH is configured in units of control channel elements (CCEs), and one CCE includes nine REGs.

In order to check whether a PDCCH including L CCEs is transmitted to a UE, the UE checks $M^{(L)}(\geq L)$ CCEs which are consecutive or disposed according to a specific rule. The value of L that the UE needs to consider to receive the PDCCH may be greater than 1. The CCE sets which the UE needs to check for PDCCH reception are referred to as a search space. For example, an LTE system defines the search space as shown in Table 3.

TABLE 3

| Type | Search $S_k^{(L)}$ | | Number of PDCCH candidates $M^{(L)}$ |
| | Aggregation level $L$ | Size [in CCEs] | |
|---|---|---|---|
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

Herein, CCE aggregation level L denotes the number of CCEs constituting a PDCCH, $S_k^{(L)}$ denotes a search space of CCE aggregation level L, and $M^{(L)}$ denotes the number of PDCCH candidates which need to be monitored in the search space of aggregation level L.

The search space may be divided into a UE-specific search space, in which only a specific UE is allowed to perform access, and a common search space, in which all UEs in a cell are allowed to perform access . A UE monitors the common search space, which corresponds to CCE aggregation levels 4 and 8, and also monitors the UE-specific search space, which corresponds to CCE aggregation levels 1, 2, 4 and 8. The common search space may overlap the UE specific search space.

In a PDCCH search space assigned to a UE with respect to each CCE aggregation level value, the position of the first CCE (having the lowest index) may vary with subframes depending on the UE. This is called PDCCH search space hashing.

The CCEs may be distributed over a system band. More specifically, a plurality of logically consecutive CCEs may be input to an interleaver. The interleaver functions to mix the input CCEs in units of REGs. Accordingly, frequency/time resources constituting one CCE are physically distributed over the whole frequency/time domain within the control region of a subframe. As a control channel is configured in units of CCEs, and interleaving is performed in units of REGs, frequency diversity and an interference randomization gain may be maximized.

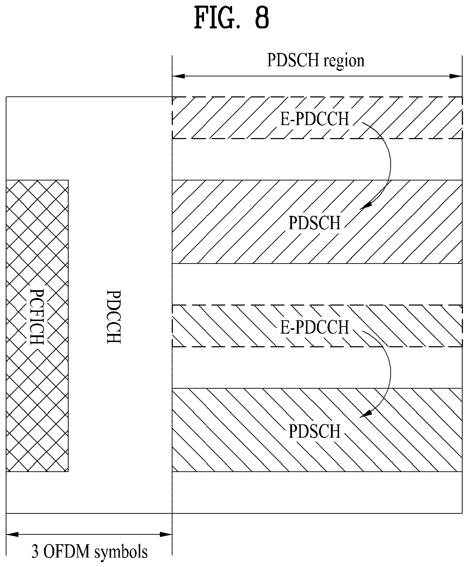

FIG. 8 illustrates an example of an EPDCCH and PDSCHs scheduled by the EPDCCH.

Referring to FIG. 8, a part of a PDSCH region, in which data is transmitted, may be defined and used for an EPDCCH, but the UE needs to perform blind decoding to detect presence of an EPDCCH thereof. The EPDCCH may perform the same scheduling operation (i.e., control of the PDSCH and PUSCH) as the legacy PDCCH. However, as the number of UEs accessing a node such as an RRH, the number of EPDCCHs allocated in the PDSCH region may increase, which may lead to increase in the number of blind decodings that the UEs need to perform. This may result in increase of complexity.

Hereinafter, a method for configuring time/frequency resources constituting an EPDCCH according to embodiments of the present invention will be discussed based on the descriptions given above. The EPDCCH is defined as a control channel that is transmitted in the existing PDSCH region by using OFDM symbols appearing after certain OFDM symbols in a specific subframe, unlike in the case of the legacy PDCCH. The EPDCCH uses one or a few PRB pairs. The EPDCCH is characterized in that it uses only some PRB pairs with respect to the whole frequency domain. The PRB pairs on which the EPDCCH can be transmitted may be pre-signaled to the UE through a higher layer signal such as RRC. One PRB pair may be divided into a certain number of enhanced resource element groups (EREGs), EREGs positioned in the same PRB pair or different PRB pairs may be grouped into an enhanced control channel element (ECCE). Finally, one EPDCCH may be transmitted by bundling one or more ECCEs.

One EPDCCH may be classified into a localized mode or a distributed mode depending on whether the EREGs constituting the EPDCCH has been extracted from the same PRB pair or different PRB pairs. Once time/frequency resources constituting the EPDCCH are given, a UE receives a control signal carrying the EPDCCH in a manner that the UE constructs, according to a certain rule, EPDCCH candidates through which the EPDCCH can be transmitted to the UE and detects whether EPDCCH transmission has been actually implemented on each EPDCCH candidate. In this sense, resources constituting an EPDCCH may be viewed as time/frequency resources having EPDCCH candidates on which the EPDCCH can be transmitted.

Hereinafter, description will be given of a method for configuring time resources constituting an EPDCCH.

Transmission of an EPDCCH may be impossible in some subframes. For example, if a DwPTS of a TDD special subframe which is used for transmission of a downlink signal is excessively short in length, REs needed to transmit the EPDCCH may be insufficient, or a DM-RS of the EPDCCH may not exist. Accordingly, transmission of the EPDCCH may be impossible in such subframes.

Further, in the case of a PRB pair on which signals such as a primary synchronization signal (PSS), a secondary synchronization signal (SSS), and a PBCH that the conventional UEs should receive, transmission of the DM-RS of the EPDCCH may not be allowed due to these signals (i.e., the PSS, SSS, etc.). In this case, transmission of the EPDCCH may be impossible on the PRB pair of the corresponding subframe.

Further, in the case of a PMCH, over which multiple cells transmit the same signal for multicast simultaneously, or a positioning RS, which is transmitted to locate a UE, collision with the EPDCCH DM-RS may occur, and thus transmission of the EPDCCH may be impossible in the corresponding subframe.

When transmission of the EPDCCH is impossible in some subframes, it is preferable that a control signal is received over the PDCCH in these subframes. In usual cases, the UE may not know the positions where transmission of a PMCH or a PRS occurs. In addition, if the PRB pairs on which the PSS/SSS/PBCH is transmitted partially overlap the EPDCCH transmission resources, the eNB may not clearly determine whether or not EPDCCH transmission will be performed. Accordingly, to address this problem, the eNB may deliver, to the UE, information about subframes in which EPDCCH transmission is impossible and thus the UE needs to receive a PDCCH, through a higher layer signal such as RRC.

There are various reasons for which EPDCCH transmission is impossible, and the time periodicity with which subframes in which EPDCCH transmission is impossible appear significantly varies according to the reasons. More specifically, in the case in which transmission of the EPDCCH is impossible because of presence of the PSS/SSS/PBCH, the corresponding subframes repeat with a short periodicity of, for example, 5 ms, and accordingly subframes in which the UE needs to receive a PDCCH preferably appear with a periodicity as short as 5 ms or 10 ms. On the other hand, in the case in which EPDCCH transmission is impossible because of the PMCH or the PRS, the corresponding signals appear intermittently with a periodicity of tens or hundreds of ms, and thus a periodicity of appearance significantly different from that for the case of the PSS/SSS/PBCH is given. In other words, when it is assumed that a pattern of subframes in which the UE detects the PDCCH is signaled through a predetermined bitmap, bits, the number of which corresponds to the periodicity of appearance of the PMCH or the PRS, are needed, and accordingly large signaling overhead may occur.

Therefore, the present invention proposes that subframes in which the PDCCH is to be detected be indicated through a plurality of subframe patterns and that a UE operate to detect a PDCCH rather than transmitting an EPDCCH in a subframe if the UE is instructed to detect the PDCCH in at least one of the subframe patterns.

For example, subframe pattern #1 may be implemented in the form of a 10-bit bitmap which repeats with a short periodicity of, for example, 10 ms and used to indicate a subframe for PDCCH detection resulting from the PSS/SSS/PBCH. Subframe pattern #2 may be implemented in one of combinations of predetermined periodicities and offsets and used to indicate a subframe for PDCCH detection resulting from the PMCH or the PRS having a long periodicity. Of course, in the case in which the PMCH or the PRS uses multiple periodicities/offsets, multiple patterns having a structure such as subframe pattern #2 may be transmitted. Thereby, signaling overhead needed to inform of the position of the PDCCH detection subframe may be reduced.

More specifically, suppose that subframe pattern #1 repeats with a periodicity of 10 ms and is transmitted in the form of a bitmap indicating "1000010000", and subframe pattern #2 is given an offset of 17 ms with a periodicity of 200 ms. In this case, the UE may detect the PDCCH in subframes #0 and #5 of each radio frame according to subframe pattern #1, and may also detect the PDCCH in subframe #7 of every 21st subframe according to subframe pattern #2.

Hereinafter, description will be given of a method for configuring frequency resources constituting an EPDCCH according to one embodiment of the present invention.

Since the EPDCCH needs to be transmitted together with another signal (e.g., a CRS, a CSI-RS, etc.) in the PDSCH region, the number of resource elements (REs) that the EPDCCH can use may change depending on the configuration of each subframe. Accordingly, in order to construct each EPDCCH with the same amount of resources, the size of a constituent frequency resource of the EPDCCH is preferably changed according to the number of REs that the EPDCCH can use.

Accordingly, the present invention proposes that a PRB set having a certain size be taken as a basic unit for EPDCCH frequency resource configuration, and the size of the frequency resource constituting an EPDCCH of each UE be adjusted by changing the number of PRB sets corresponding to the basic unit.

For example, a PRB set which is the basic unit of EPDCCH frequency resource configuration may include 4 PRB pairs, and a relatively small number of PRB sets is used in a subframe in which a relatively large number of REs per PRB pair is available, a relatively large number of PRB sets is used in another subframe in which a relatively small number of REs per PRB pair is available. Accordingly, the eNB pre-configures N PRB sets for a higher layer signal such as RRC, such that all the N PRB sets are used in a subframe provided with a relatively small number of available REs per PRB pair, while a reduced number of PRB sets (N/2 PRB sets) is used in another subframe provided with a relatively large number of available REs per PRB pair.

As a method to determine the number of PRB sets for a UE to use, the number of available REs may be measured on each PRB pair and it may be determined whether the measured number is greater than a certain threshold. Alternatively, the eNB may inform the UE of the number of PRB sets to be used in each subframe, through a higher layer signal such as RRC. In this case, it is preferable in terms of prevention of increase of EPDCCH decoding complexity of the UE to reduce the number of EPDCCH candidates per PRB set in a subframe using a relatively large number of PRB sets such that the total number of EPDCCH candidates remains constant in each subframe.

Specifically, according to this embodiment, when it is assumed that the UE attempts to detect $\{M_1, M_2, M_4, M_8\}$ EPDCCH candidates of aggregation levels $\{1, 2, 4, 8\}$ in a subframe, and K PRB sets are used in the subframe, each PRB set is configured to have $\{M_1/K, M_2/K, M_4/K, M_8/K\}$ EPDCCH candidates. If the value of $M_L/K$ indicating the number of EPDCCH candidates in each PRB set for each aggregation level is not an integer, the number of EPDCCH candidates in each PRB set may be set to correspond to the greatest integer less than this value. If there are remaining EPDCCH candidates after such setting, each thereof may be added to the PRB sets from the PRB set having the lowest index such that the total number of EPDCCH candidates is maintained. It is also possible that PRB sets are arranged such that a PRB set including more PRB pairs is assigned a lower index and thus more EPDCCH candidates.

Further, the size of an ECCE (i.e., the number of EREGs constituting the ECCE) may vary in connection with the number of PRB sets used in a subframe according to the number of available REs per PRB pair in the subframe. This is intended to make the coding rate of the ECCE remain constant by increasing the size of the ECCE (i.e., by reducing the number of ECCEs per PRB pair) in the case in which there are many different signals and thus only a small number of REs are available for the EPDCCH. For example, when subframe #1 uses K1 PRB sets, and subframe #2 uses K2 PRB sets, if the size of the ECCE in subframe #1 is set to PI REs, the size of the ECCE in subframe #2 may be set to P1×K2/K1 REs.

Herein, when there are K PRB sets provided, it is assumed that EPDCCH candidates are divided into the respective PRB sets as equally as possible. However, it is also possible to assign a weighting factor to each PRB set such that more EPDCCH candidates are allocated to a PRB set having a greater weighting factor. For example, suppose that the UE attempts to detect $\{M_1, M_2, M_4, M_8\}$ EPDCCH candidates of aggregation level $\{1, 2, 4, 8\}$ in a subframe, the weighting factor assigned to the m-th PRB set of the K PRB sets is given as $\{w_{m,1}, w_{m,2}, w_{m,4}, w_{m,8}\}$ for each aggregation level. In this case, the number of EPDCCH candidates for each PRB set may be given as $\{M_1{}^*w_{m,1}/w_1, M_2{}^*w_{m,2}/w_2, M_4{}^*w_{m,4}/w_4, M_8{}^*w_{m,8}/w_8\}$, wherein $w_L$ corresponds to the sum of the weighting factors for the respective PRB sets at aggregation level L. In this case, EPDCCH candidates may be allocated to the respective PRB sets in proportion to the weighting factors for each aggregation level. The weighting factor for a PRB set may be determined depending on the number of PRB pairs constituting the PRB set (in a manner of, for example, assigning a greater weighting factor to a PRB set having more PRB pairs to allocate more EPDCCH candidates to the PRB set) or on whether the PRB set corresponds to the localized EPDCCH or distributed EPDCCH (in a manner of, for example, assigning a greater weighting factor to a PRB set configured as the distributed EPDCCH enabling more stable EPDCCH transmission). Alternatively, the weighting factor may be set to a value that the eNB has set through a higher layer signal such as RRC.

When the weighting factors are assigned according to PRB sets, if $M_L{}^*w_{m,L}/w_L$ indicating the number of EPDCCH candidates for each aggregation level allocated to a corresponding PRB set is not an integer, the number of EPDCCH candidates may be set to a greatest value less than or equal to $M_L{}^*w_{m,L}/w_L$. If there are remaining EPDCCH candidates after such setting, each thereof may be added to the PRB sets from the PRB set having the lowest index such that the total number of EPDCCH candidates is maintained. Once the number of EPDCCH candidates of a specific PRB set is determined to be increased by 1, an aggregation level at which the number of EPDCCH candidates is to be increased needs to be determined. For example, the number of EPDCCH candidates of a specific aggregation level such as the lowest aggregation level, the highest aggregation level, or an aggregation level in the middle thereof may be predetermined to be increased.

In addition, the size of ECCEs (e.g., the number of ECCEs per PRB pair) may be fixed regardless of the number of available REs per PRB pair. In this case, the reduced number of REs may be complemented by increasing the minimum value of the aggregation level to a value greater than 1. For example, the UE may attempt to detect $\{M_1, M_2, M_4, M_8\}$ of aggregation level $\{2, 4, 8, 16\}$ in the case in which there are a smaller number of available REs, while attempting to detect $\{M_1, M_2, M_4, M_8\}$ EPDCCH candidates of aggregation level $\{1, 2, 4, 8\}$ in the case in which there are a large number of available REs. In this case, if the number of PRB sets which are used, K, increases, the number of EPDCCH candidates per PRB set is reduced. Thereby, the total number of EPDCCH candidates in a subframe is maintained.

According to one embodiment, it may be assumed that K (i.e., k=1, 2,..., (K-1), K) EPDCCH sets are configured for EPDCCH transmission with respect to a specific UE. Hereinafter, for simplicity of description, it is assumed that K EPDCCH sets are given. The description given below may also be applied to the K PRB sets described above. The present invention proposes a method for efficiently (re)distributing EPDCCH candidates of a specific aggregation level between K EPDCCH sets when a specific UE attempts to detect $\{M_{a,k}, M_{b,k}, M_{c,k}, M_{d,k}\}$ EPDCCH candidates for aggregation level $\{a, b, c, d\}$ in the k-th EPDCCH set. Herein, $M_{a,k}$ denotes the number of the EPDCCH candidates for aggregation level a that the UE attempts to detect in the k-th EPDCCH set.

The embodiment of the present invention may also be applied to the case in which the number of EPDCCH candidates for a specific aggregation level is the same or partially or fully different between the K EPDCCH sets.

According to one embodiment of the present invention, in order to reasonably (re)distribute the number of EPDCCH candidates for a specific aggregation level among K EPDCCH sets, a weight ($W_{a,k}$) for the number of EPDCCH candidates of aggregation level a for the k-th EPDCCH set may be defined. That is, the weight ($W_{a,k}$) for the number of EPDCCH candidates of aggregation level a for the k-th EPDCCH set may be derived based on at least one variable of the number of EPDCCH candidates ($M_{a,k}$) of preconfigured aggregation level a for the k-th EPDCCH set, the sum of the numbers of EPDCCH candidates of K EPDCCH sets for aggregation level a (i.e., $\sum_{i=1}^{K} M_{a,i}$), the number of PRB pairs ($N_k$) constituting the k-th EPDCCH set and the sum of the numbers of PRB pairs of K EPDCCH sets (i.e, $\sum_{i=1}^{K} N_i$) (through, for example, a predefined function taking these variables as input factors).

Alternatively, the weight for the number of EPDCCH candidates for each EPDCCH set of aggregation level a may be pre-assigned a specific value through a higher layer signal such as RRC. For example, the weight ($W_{a,k}$) for the number of EPDCCH candidates for the k-th EPDCCH set of aggregation level a may be calculated as $M_{a,k}/\sum_{i=1}^{K} M_{a,i}$ or $N_k/\sum_{i=1}^{K} N_i$. That is, when the numbers of EPDCCH candidates for aggregation level a are (re)distributed among multiple EPDCCH sets based on the weights derived through this process, an EPDCCH set previously assigned a relatively large number of EPDCCH candidate for aggregation level a or an EPDCCH set configured based on a relatively large number of PRB pairs may be (re)assigned a relatively large number of EPDCCH candidates for aggregation level a according to one embodiment of the present invention.

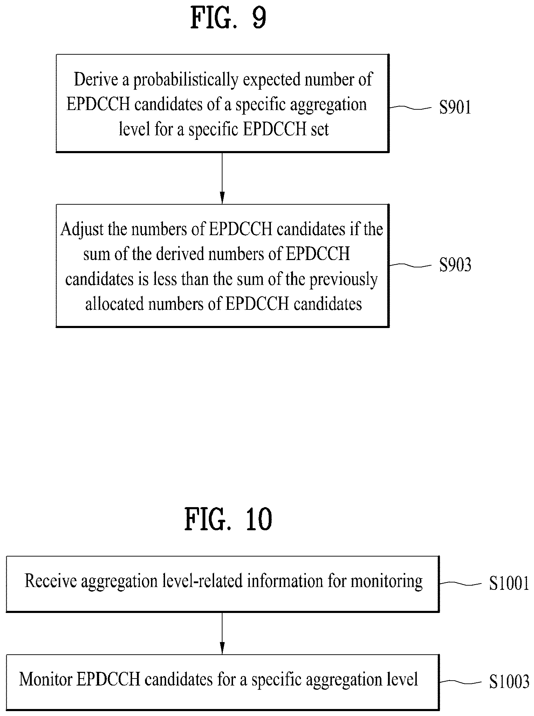

Hereinafter, a more detailed description will be given of a method for (re)distributing the numbers of EPDCCH candidates for a specific aggregation level between K EPDCCH sets according to one embodiment, with reference to FIG. 9.

First, the number of EPDCCH candidates for aggregation level a that is probabilistically expected for the k-th EPDCCH set or a (probabilistic) expected value ($X_{a,k}$) for the number of EPDCCH candidates of aggregation level a for the k-th EPDCCH set may be derived from Equation 1 below (S901).

Equation 1

$$X_{a,k} = \left\lfloor \frac{\left(\sum_{i=1}^{K} M_{a,i}\right)}{K} * W_{a,k} \right\rfloor$$

Herein, it is assumed that a weight for the number of EPDCCH candidates of aggregation level a for the k-th EPDCCH set is derived, for example, through an equation $W_{a,k} = M_{a,k}/\sum_{i=1}^{K} M_{a,i}$ (or $W_{a,k} = N_k/\sum_{i=1}^{K} N_i$). That is, the numbers of EPDCCH candidates for aggregation level a are (re)allocated to the respective EPDCCH sets by a (probabilistic) expected value for the number of EPDCCH candidates of aggregation level a for each EPDCCH set calculated through Equation 1.

If the sum of the (probabilistic) expected values for the numbers of EPDCCH candidates of aggregation level a for the respective EPDCCH sets calculated in step S901 is less than the sum of the numbers of EPDCCH candidates of K EPDCCH sets allocated to aggregation level a, namely, if the condition of $\left(\sum_{i=1}^{K} M_{a,i} < \sum_{i=1}^{K} X_{a,i}\right)$ is satisfied, the numbers of EPDCCH candidates are adjusted such that the number of remaining unallocated EPDCCH candidates of aggregation level a (i.e., $\left(\sum_{i=1}^{K} M_{a,i} - \sum_{i=1}^{K} X_{a,i}\right)$) is reasonably (re)distributed between the K EPDCCH sets (S903).

Step S903 may be performed based on a parameter (e.g., $Q_{a,k}$) representing a difference between an ideal expected value for the number of EPDCCH candidates of aggregation level a for the k-th EPDCCH set and the number of EPDCCH candidates actually (re)allocated to this EPDCCH set in S903. For example, the parameter (i.e., $Q_{a,k}$) may be defined as Equation 2 below.

$$Q_{a,k} = \left( \left( \frac{\left( \Sigma_{i=1}^{K} M_{a,i} \right)}{K} * W_{a,k} \right) - X_{a,k} \right)$$

Alternatively, the parameter (i.e., $Q_{a,k}$) may be defined as $W_{a,k}$ - ($X_{a,k}/M_{a,k}$).

The number of remaining unallocated EPDCCH candidates of aggregation level a (i.e., $\sum_{i=1}^{K} M_{a,i} - \sum_{i=1}^{K} X_{a,i}$) may be distributed between the EPDCCH set having relatively large $Q_{a,k}$ values by increasing the numbers of EPDCCH candidates of aggregation level a for these EPDCCH sets one by one (sequentially). That is, one EPDCCH candidate is added for an aggregation level to which the smallest number of EPDCCH candidates with respect to the ideal expected value for a specific aggregation level of a specific EPDCCH set are allocated in step S901. Herein, (re)distribution of the number of remaining EPDCCH candidates of aggregation level a (i.e., $\sum_{i=1}^{K} M_{a,i} - \sum_{i=1}^{K} X_{a,i}$) may be repeated until the number of remaining EPDCCH candidates of aggregation level a is 0.

On the other hand, if the sum of the (probabilistic) expected values for the numbers of EPDCCH candidates for the respective EPDCCH sets of aggregation level a calculated in step S901 is equal to the sum of the numbers of EPDCCH candidates of K EPDCCH sets allocated to aggregation level a, namely, if the condition of $\left( \sum_{i=1}^{K} M_{a,i} = \sum_{i=1}^{K} X_{a,i} \right)$ is satisfied, the process may be terminated without performing (re)distribution of the number of remaining EPDCCH candidates of aggregation level a.

In the embodiment described above, the numbers of EPDCCH candidates for a specific aggregation level are distributed first between K EPDCCH sets through S901, and then if the sum of (probabilistic) expected values for the numbers of EPDCCH candidates of a specific aggregation level calculated according to the respective EPDCCH sets in S901 is less than the sum of the numbers of EPDCCH candidates of K EPDCCH sets allocated to the aggregation level, the number of remaining EPDCCH candidates of the specific aggregation level which has not been allocated through S901 is (re)allocated through S903. That is, the number of remaining EPDCCH candidates of a specific aggregation level (e.g., aggregation level a) unallocated through S901 may be (re)distributed between K EPDCCH sets as EPDCCH candidates of the aggregation level (i.e., aggregation level a) only within the aggregation level range (i.e., aggregation level a).

According to another embodiment of the present invention, $X_{h,k}$ (h ∈ {a, b, c, d}, k ∈ {1, 2,..., (K-1), K)-based EPDCCH candidates may be allocated to EPDCCH sets of all aggregation levels (i.e., aggregation levels {a, b, c, d}) through S901, and then the remaining EPDCCH candidates for all aggregation levels (i.e., the sum of $\left( \sum_{i=1}^{K} M_{a,i} - \sum_{i=1}^{K} X_{a,i} \right)$ for all aggregation levels) may be (re)distributed between K EPDCCH sets within the range of all aggregation levels based on $Q_{h,k}$ (h ∈ {a, b, c, d}, k ∈ {1, 2,..., (K-1), K}) described above. That is, an EPDCCH set having the greatest $Q_{h,k}$ (h ∈ {a, b, c, d}, k ∈ {1, 2,..., (K-1), K}) is first assigned one of the whole remaining EPDCCH candidates as an EPDCCH candidate of the corresponding aggregation level.

Additionally, if none of the EPDCCH candidates for aggregation level a has been (re)allocated to the k-th EPDCCH set through S901 even though the number of EPDCCH candidates for aggregation level a of the k-th EPDCCH set is set to a value other than 0, the number of remaining unallocated EPDCCH candidates of aggregation level a may be allocated to the k-th specific EPDCCH set first (exceptionally) in S903 in distributing the number of remaining unallocated EPDCCH candidates of aggregation level a in step S903.

Hereinafter, description will be given of a method for efficiently designing and managing a search space (SS) of the EPDCCH according to one embodiment of the present invention. As described above, the PDSCH region refers to a region configured by the OFDM symbols of a subframe (SF) including multiple OFDM symbols except a few first OFDM symbols thereof used for legacy PDCCH transmission. This embodiment may also be applied to a case in which there is no OFDM symbol used for PDCCH transmission and thus all OFDM symbols of the corresponding SF are designated and used as the PDSCH region. In addition, it is apparent that the EPDCCH described below can be used not only for communication between a typical UE and the eNB and also for communication between a relay and the eNB.

For simplicity of description given below, a basic unit of resources constituting an EPDCCH is referred to as an ECCE, and the ECCE is defined as including a predefined number of REs. Further, if the number of ECCEs used for specific EPDCCH transmission is N, the aggregation level (AL) is denoted by N.

According to one embodiment, it is assumed that the channel state between the eNB and the UEs and/or the number of REs available for EPDCCH transmission on a specific PRB Pair are changed in order to ensure EPDCCH transmission with high reliability. In this regard, the present invention proposes that the number of ECCEs (i.e., an AL) used for specific EPDCCH transmission, the number of REs constituting one ECCE, or both the number of ECCEs used for the specific EPDCCH transmission and the number of REs constituting one ECCE be changed. According to such embodiments of the present invention, the coding rate for EPDCCH transmission may be properly changed according to change in situation or be properly maintained regardless of change in situation. Accordingly, EPDCCH transmission may be performed with high reliability.

For example, a relatively large number of ECCEs (namely, a relatively high AL) may be used for EPDCCH transmission to lower the EPDCCH coding rate if the channel state is not good, or if the number of REs available for EPDCCH transmission on a specific PRB pair is less than a predefined threshold (i.e., $X_{\_th}$). Thereby, a proper level of the EPDCCH coding rate may be maintained.

In the case of the legacy PDCCH, the number of blind decoding (BD) for each AL or the maximum number of BDs that a UE needs to perform in a SS may be predefined. Referring to Table 3, in the case of the UE specific search space (USS), BDs for ALs 1, 2, 4 and 8 are defined respectively as 6, 6, 2, and 2. The UE may receive specific transmission mode (TM or fallback TM)-based control information (e.g., TM-specific DCI or fallback DCI) that the eNB transmits to the UE, through the number of BDs defined for each AL in the USS.

Accordingly, the present invention proposes that the operation of the UE of receiving control information be performed with low complexity through efficient configuration of the number of BDs for each AL when multiple ALs are defined in an environment in which the EPDCCHs are used.

Embodiments of the present invention are applicable to all cases regardless of the EPDCCH transmission type (e.g., localized EPDCCH (L-EPDCCH) or distributed EPDCCH (D-EPDCCH)) or whether the number of REs available for EPDCCH transmission on a specific PRB pair is greater or less than a predefined threshold ($X_{\_th}$).

The embodiments of the present invention are also applicable to an environment in which at least one EPDCCH set (wherein a specific EPDCCH set may be constructed with multiple PRB pairs) is configured for EPDCCH transmission, a case in which the EPDCCH sets have the same number or type configuration of ALs, or a case in which the EPDCCH sets have different numbers or type configurations of ALs configured for the respective EPDCCH sets.

According to one embodiment, when M ALs are used for EPDCCH transmission, predefined K BD numbers (i.e., $BD_1$, $BD_2$,..., $BD_{K-1}$, and $BD_K$) may be applied only to the predefined K ALs, or BD number types corresponding to K ALs selected among the M ALs may be applied. Hereinafter, the numbers of BSs indicated in {$BD_1$, $BD_2$,..., $BD_{K-1}$, $BD_K$} may be interpreted as the numbers of EPDCCH candidates which need to be monitored to detect control information based on the respective ALs.

FIG. 10 is a reference diagram illustrating operation of monitoring EPDCCH candidates according to one embodiment of the present invention.

The UE receives AL-related information for monitoring control information (S1001). For example, information about at least one of the value of K (related to ALs), K BD number types and values for the types may be implicitly determined according to a predefined rule or be signaled to the UE through a predefined signal (e.g., a higher layer signal) by the eNB. In particular, the value of K may be defined to be equal to the number of all AL types of the legacy PDCCH (e.g., 'K=4' (i.e., ALs {1, 2, 4, 8})), and the BD types of the legacy PDCCH (e.g., BDs {6, 6, 2, 2} for the USS) may be reused for BDs corresponding to the K (i.e., 'K=4') ALs.

In another example, the sum of the numbers of BDs allocated to the K selected ALs (i.e., '$BD_1+BD_2+...+BD_{K-1}+BD_K$') may be set not to exceed a predefined value (e.g., 16). Herein, information about the sum of the numbers of BDs may also be implicitly determined according to a predefined rule or delivered to the UE through a predefined signal (e.g., a higher layer signal) by the eNB.

In another example, information about at least one of the value of K, K BD number types or values therefor, and K AL types/configurations may be differently configured depending on at least one of a system bandwidth, information about the number of PRB pairs constituting an EPDCCH set, EPDCCH transmission type information (e.g., localized or distributed EPDCCH (set)) about the EPDCCH set, and the type information about DCI formats which the UE monitors. Further, relevant information may be implicitly determined according to a predefined rule or be signaled to the UE by the eNB through a predefined signal (e.g., a higher layer signal).

Additionally, even if at least one of the value of K (related to ALs), K BD number types or values therefor, and K AL types/configurations is specifically configured, it may be differently applied depending on the predefined rule. That is, the UE may apply specific information (e.g., the value of K) with a different meaning according to the system bandwidth, information about the number of PRB pairs constituting an EPDCCH set, EPDCCH transmission type information (e.g.,

localized or distributed EPDCCH set) about the EPDCCH set, and the type information about a DCI format which the UE monitors.

For example, in a situation in which the system bandwidth is wider than a predefined threshold, even if a specific value of K or K BD number types is given, the UE may be configured to allocate K numbers of BDs to K AL types/configurations having relatively high values or specific ALs according to a predefined rule. Specifically, if 5 ALs (e.g., ALs {1, 2, 4, 8, 16}) are used for EPDCCH transmission, K is set to have a value (e.g., 'K=4') equal to the number of AL types of the legacy PDCCH, and the numbers of BDs corresponding to K (i.e., 'K=4') ALs are set to reuse BD number types (e.g., blind decoding {6, 6, 2, 2}) in the legacy PDCCH USS, the numbers of BDs according to BDs {6, 6, 2, 2} may be allocated only to 4 ALs (configured, for example, as {1, 2, 4, 8} or {2, 4, 8, 16}) selected among 5 ALs according to a predefined rule. In other words, different ALs (e.g., adopted ALs are multiples of specific ALs) may be applied to a specific number of BDs or a specific number of EPDCCH candidates.

Alternatively, if 6 ALs (e.g., ALs {1, 2, 4, 8, 16, 32}) are used for EPDCCH transmission, 'K=4' and BDs {6, 6, 2, 2}) are applied in the same manner as in the previous case, the numbers of BDs according to BDs{6, 6, 2, 2} may be allocated only to 4 ALs (configured, for example, as {1, 2, 4, 8}, {2, 4, 8, 16}, or {2, 4, 8, 32}) selected among 6 ALs based on a predefined rule.

Alternatively, K AL types selected for blind decoding among M ALs for EPDCCH transmission may be implicitly selected through a predefined rule or be delivered to the UE through a predefined signal (e.g., a higher layer signal) by the eNB. For example, K AL types selected for allocation of the numbers of BDs among the M ALs may be differently configured depending on at least one of the system bandwidth, the information about the number of PRB pairs constituting an EPDCCH set, the EPDCCH transmission type information (e.g., localized or distributed EPDCCH set) about the EPDCCH set, and the type information about a DCI format which the UE monitors.

Further, the monitoring-related information may be implicitly determined according to a predefined rule, or be signaled to the UE through a predefined signal (e.g., a higher layer signal) by the eNB.

According to one embodiment of the present invention, in the case in which the information is set to be implicitly determined based on the predefined rule, the rule may be established such that K AL types of different configurations are selected among all of M ALs depending on whether or not a predefined specific reference condition is satisfied. Herein, information about the specific reference condition may be implicitly determined according to a predefined rule, or be signaled to the UE through a predefined signal (e.g., a higher layer signal) by the eNB.

Specifically, the specific reference condition may be assumed to be about whether or not the number of REs (i.e., N_RE) available for EPDCCH transmission on one PRB pair meets a (predefined) threshold ($X_{-th}$). In this case, if the number of REs (i.e., N_RE) available for EPDCCH transmission on a specific PRB pair is less than the predefined threshold ($X_{-th}$), K ALs selected from among all M ALs may include K ALs higher than or equal to a predefined 'minimum ALs (i.e., $AL_{N\_RE<X}$)'. For example, in selecting K ALs from among M ALs, ascending ordering of AL values may be applied to an AL set including the M ALs, and then K ALs may be sequentially selected from the first AL higher than or equal to the predefined 'minimum AL' (which may be represented as, for example, a selection method based on cyclic shift), or may be selected based on a predefined selection rule (e.g., a method different from the method of sequential selection).

Herein, for example, the minimum AL (i.e., $AL_{N\_RE<X}$) may be implicitly selected according to a predefined rule (e.g., if N_RE<X, '$AL_{N\_RE<X}=2$') or be signaled to the UE through a predefined signal (e.g., a higher layer signal) by the eNB. In addition, the minimum AL (i.e., $AL_{N\_RE<X}$) may be differently configured depending on at least one of the system bandwidth, the information about the number of PRB pairs constituting an EPDCCH set, the EPDCCH transmission type information (e.g., localized or distributed EPDCCH set) about the EPDCCH set, and the type information about a DCI format which the UE monitors.

Further, the monitoring-related information may be implicitly determined according to a predefined rule, or be signaled to the UE through a predefined signal (e.g., a higher layer signal) by the eNB.

In another example, if the number of REs available for EPDCCH transmission on a specific PRB pair is greater than or equal to the predefined threshold ($X_{-th}$), the minimum AL (i.e., $AL_{N\_RE>=X}$) may be configured independently of the other case (i.e., N_RE<X). Herein, the minimum AL (i.e., $AL_{N\_RE>=X}$) may be implicitly selected according to a predefined rule (for example, the minimum AL is selected from among M ALs configured for EPDCCH transmission) or be signaled to the UE through a predefined signal (e.g., a higher layer signal) by the eNB.

Additionally, the minimum AL (i.e., $AL_{N\_RE>=X}$) may be differently configured depending on at least one of the system bandwidth, the information about the number of PRB pairs constituting an EPDCCH set, the EPDCCH transmission type information (e.g., localized or distributed EPDCCH set) about the EPDCCH set, and the type information about a DCI format which the UE monitors. Further, information related to the minimum AL may be implicitly determined according to a predefined rule or be signaled to the UE through a predefined signal (e.g., a higher layer signal) by the eNB.

In another example, it is assumed that AL sets (i.e., $SET_{N\_RE<X}$ (including $M_{N\_RE<X}$ ALs) and $SET_{N\_RE>=X}$ (including $M_{N\_RE>=X}$ ALs)) having partially different or fully different configurations are defined for the cases of N_RE<X and N_RE>=X. In this case, $K_{N\_RE<X}$ or $K_{N\_RE>=X}$ BD number types (i.e., BD $SET_{N\_RE<X}$, BD $SET_{N\_RE>=X}$) may be allocated only to predefined $K_{N\_RE<X}$ or $K_{N-RE>=X}$ ALs in each case. This embodiment may be independently applied to the AL sets having different conditions. For example, suppose that ALs {1, 2, 4, 8, 16} (i.e., $M_{N-RE>=X=5}$) and ALs {2, 4, 8, 16, 32} (i.e., $M_{N\_RE<X=5}$) are defined for the conditions of N_RE>=X and N_RE<X respectively, '$K_{N\_RE<X}=K_{N\_RE>=X}=4$', and 'BD $SET_{N\_RE<X}=BD\ SET_{N\_RE>=X}=\{6, 6, 2, 2\}$'.

In this embodiment, if N_RE>=X, configuration for blind decoding for ALs {1, 2, 4, 8} may be set to $SET_{N\_RE>=X}=\{6, 6, 2, 2\}$. If N_RE<X, configuration for blind decoding for ALs {2, 4, 8, 16} may be set to $SET_{N\_RE<X}=\{6, 6, 2, 2\}$. Alternatively, if N_RE>=X, configuration for blind decoding for ALs {1, 2, 4, 8} may be set to $SET_{N\_RE>=X}=\{6, 6, 2, 2\}$. If N_RE<X, configuration for blind decoding for ALs {4, 8, 16, 32} may be set to $SET_{N\_RE<X}=\{6, 6, 2, 2\}$. Alternatively, if N_RE>=X, configuration for blind decoding for ALs {2, 4, 8, 16} may be set to $SET_{N\_RE>=X}=\{6, 6, 2, 2\}$. If N_RE<X, configuration for blind decoding for ALs {4, 8, 16, 32} may be set to $SET_{N\_RE<X}=\{6, 6, 2, 2\}$. Alternatively, if N_RE>=X, configuration for blind decoding for ALs {1, 2, 4, 8} may be set to $SET_{N\_RE>=X}=\{6, 6, 2, 2\}$. If N_RE<X, configuration for blind decoding for ALs {2, 4, 8, 32} may be set $SET_{N\_RE<X}=\{6, 6, 2, 2\}$. The number of BDs may be set for the individual ALs configured in this way within the predefined maximum number of BDs (i.e. 16) for a specific UE. In some cases, the number of BDs for AL 1 may be set to any number (e.g. 0) to reallocate the numbers of BDs to the other ALs.

Herein, the $K_{N\_RE<X}$ ALs and $K_{N\_RE>=X}$ ALs selected on the condition that N_RE<X or N_RE>=X may include ALs satisfying the aforementioned condition of 'the minimum AL (i.e., $AL_{N\_RE<X}$ , $AL_{N\_RE>=X}$)'. The 'minimum ALs (i.e., $AL_{N\_RE<X}$ and $AL_{N\_RE>=X}$)' for the respective cases may be implicitly selected according to a predefined rule or be signaled to the UE through a predefined signal (e.g., a higher layer signal) by the eNB. In addition, $K_{N-RE<X}$ AL types and $K_{N-RE>=X}$ AL types selected for allocation of the numbers of BDs from among $M_{N\_RE>=X}$ ALs or $M_{N\_RE<X}$ ALs may be implicitly selected according to a predefined rule or be signaled to the UE through a predefined signal (e.g., a higher layer signal) by the eNB.

In another example, it is assumed that AL sets (i.e., $SET_{N\_RE<X}$ (including $M_{N\_RE<X}$ ALs) and $SET_{N\_RE>=X}$ (including $M_{N\_RE>=X}$ ALs)) having partially different or fully different configurations are defined for the cases of N_RE<X and N_RE>=X. In this case, a union of the two sets (i.e., '$SET_{N\_RE<X} \cup SET_{N\_RE>=X}$') may be created, and then an embodiment of the present invention may be applied to the created AL union. Alternatively, the intersection of the two sets (i.e., '$SET_{N\_RE<X} \cap SET_{N\_RE>=X}$') may be created, and then an embodiment of the present invention may be applied to the created AL intersection. For example, if ALs {1, 2, 4, 8, 16} (i.e., $M_{N\_RE>=X}=5$) on the condition of N_RE>=X and ALs {2, 4, 8, 16, 32} (i.e., $M_{N\_RE<X}=5$) on the condition of N_RE<X are defined, the union of the two sets is created as ALs {1, 2, 4, 8, 16, 32}. Thereafter, the number of BDs for each AL from the union AL {1, 2, 4, 8, 16, 32} is set based on at least one of $K_{N\_RE<X}$, $K_{N\_RE>=X}$, BD $SET_{N\_RE<X}$, BD $SET_{N\_RE>=X}$, $AL_{N\_RE<X}$, and $AL_{N\_RE>=X}$, which are predefined (in an implicit manner or through a higher layer signal).

According to the embodiment described above, when N_RE<X or _RE>=X, $K_{N\_RE<X}$ or $K_{N\_RE>=X}$ AL types may be selected for allocation of the numbers of BDs from among $M_{N\_RE>=X}$ or $M_{N\_RE<X}$ ALs, and (predefined) $K_{N\_RE<X}$ or $K_{N\_RE>=X}$ BD number types (i.e., BD $SET_{N\_RE<X}$ or BD $SET_{N\_RE>=X}$) may be allocated.

Additionally, multiple (e.g., 2) informations of "$K_{N\_RE<X}$ AL types and $K_{N\_RE>=X}$ AL types, and $K_{N\_RE<X}$ BD number types and $K_{N\_RE>=X}$ BD number types in connection therewith" may be predefined, the eNB may signal, through a physical layer signal or higher layer signal, one specific information (i.e., one information selected from the predefined multiple informations) which is applied at or after a specific time. Herein, the information about the number of pre-generated informations may be implicitly determined according to a predefined rule or be signaled to the UE through a predefined signal (e.g., a higher layer signal or physical layer signal) by the eNB.

For example, parameters (e.g., at least one of $K_{N\_RE<X}$, $K_{N\_RE>=X}$, BD $SET_{N\_RE<X}$, BD $SET_{N\_RE>=X}$, $AL_{N\_RE<X}$, and $AL_{N\_RE>=X}$) for informations needed to create multiple informations of "$K_{N\_RE<X}$ AL types and $K_{N\_RE>=X}$ AL types, and $K_{N\_RE<X}$ BD number types and $K_{N\_RE>=X}$ BD number types in connection therewith" may be implicitly configured according to a predefined rule or be signaled to the UE through a predefined signal (e.g., a higher layer signal or physical layer signal) by the eNB.

In addition, some or all of the parameters for informations needed to create multiple informations of "$K_{N\_RE<X}$ AL types and $K_{N-RE>=X}$ AL types, and $K_{N\_RE<X}$ BD number types and $K_{N-RE>=X}$ BD number types in connection therewith" may be differently configured. This is intended to adaptively select most proper information according to change in channel state or change in the number of REs available for EPDCCH transmission on one PRB pair (for example, efficient adaptive selection may be implemented by predefining multiple informations based on different parameters).

For example, when two informations (information#A and information#B) are predefined, one information (information#A) may be configured to indicate that a configuration for bind decoding for ALs {1, 2, 4, 8} when N_RE>=X is $SET_{N\_RE>=X}=\{6, 6, 2, 2\}$, and a configuration for bind decoding for ALs {4, 8, 16, 32} when N_RE<X is $SET_{N\_RE<X}=\{6, 6, 2, 2\}$. The other information (information#B) may be configured to indicate that a configuration for bind decoding for ALs {2, 4, 8, 16} when N_RE>=X is $SET_{N\_RE>=X}=\{6, 6, 2, 2\}$, and a configuration for bind decoding for ALs {4, 8, 16, 32} when N_RE<X is $SET_{N\_RE<X}=\{6, 6, 2, 2\}$. Further, the eNB may signal, to the UE, information (i.e., one of information#A and information#B) which is applied at or after a specific time, through a physical layer signal or higher layer signal. In particular, information#B may be selected when the channel state is not good or the number of REs available for EPDCCH transmission on one PRB pair is not sufficient (information#A may be selected when the opposite conditions are given).

In addition, configurations according to one embodiment of the present invention may be established such that different operations are performed based on independent parameters configured for each type of DCI formats which the UE monitors, namely the fallback TM mode-based DCIs (e.g., DCIs 0/1A) and the TM mode-based DCIs (e.g., DCIs 2/2A/2B/2C). In other words, according to one embodiment of the present invention, configurations may be established such that different operations are performed based on at least one of the value of the K set, the minimum AL (e.g., $AL_{N-RE<X}$, $AL_{N\_RE>=X}$, or the like), K selected AL type configurations and K BD type configurations, which are independently configured for each DCI type that the UE monitors.

According to another embodiment, when multiple EPDCCH sets are configured for EPDCCH transmission, configurations may be established such that different operations are performed based on independent parameters (e.g., at least one of the value of K, the minimum AL (e.g., $AL_{N\_RE<X}$, $AL_{N\_RE>=X}$, or the like), K selected AL type configurations and K BD type configurations) configured for each EPDCCH set.

As another proposed method, multiple EPDCCH sets may be configured to have the same K value and the same K BD numbers allocated to K ALs (i.e. {$BD_1$, $BD_2$,..., $BD_{K-1}$, $BD_K$}). Thereby, the K BD numbers (i.e. {$BD_1$, $BD_2$,..., $BD_{K-1}$, $BD_K$}) may be efficiently distributed between the different EPDCCH sets based on a predefined rule. Herein, even if a specific UE performs blind decoding for the multiple EPDCCH sets, the number of BDs may be set not to exceed a maximum number of BDs (i.e., $BD_1+BD_2+...+BD_{K-1}+BD_K$ (e.g. 16)) predefined for the specific UE. For example, when an L-EPDCCH set based on ALs {1, 2, 4, 8} (i.e., 'M=4') for localized EPDCCH transmission and a D-EPDCCH set based on ALs {1, 2, 4, 8, 16} (i.e., 'M=5') for distributed EPDCCH transmission are configured, suppose that the value of K (related to ALs) is set to 4 and the K BD numbers {$BD_1$, $BD_2$,..., $BD_{K-1}$, $BD_K$} are set to {6, 6, 2, 2} for the two sets and that the L-EPDCCH set has BD configuration {6, 6, 2, 2} for ALs {1, 2, 4, 8} and the D-EPDCCH set has BD configuration {6, 6, 2, 2} for ALs {2, 4, 8, 16}.

In this case, the specific UE considers 'BD configuration {3, 3, 2, 2} for ALs {1, 2, 4, 8}' in the case of the L-EPDCCH set' and 'BD confirmation {3, 3, 2, 2} for ALs {2, 4, 8, 16}' in the case of the D-EPDCCH set according to a predefined split rule (e.g., equal splitting of the number of BDs between the EPDCCH sets), thereby performing the BD operation for each EPDCCH set at each AL. Herein, for a specific UE, the number of BDs does not exceed the predefined maximum number of BDs (i.e., 16).

According to another embodiment, it is assumed that there is a rule stating that K BD number types (i.e., {$BD_1$, $BD_2$,..., $BD_{K-1}$, $BD_K$}) should be applied to only predefined K ALs when M ALs are used for EPDCCH transmission. In this case, configurations may be established such that different operations are performed based on independent parameters (e.g., at least one of the value of K, the minimum AL (e.g., $AL_{N\_RE<X}$, $AL_{N\_RE>=X}$, or the like), K selected AL type configurations and K BD type configurations) configured for each type of DCI formats which the UE monitors (namely, the fallback TM mode-based DCIs (e.g., DCIs 0/1A) and the TM mode-based DCIs (e.g., DCIs 2/2A/2B/2C)). Further, the information about the independent parameters configured for each type of DCI formats may be implicitly determined according to a predefined rule or be signaled to the UE through a predefined signal (e.g., a higher layer signal) by the eNB.

In addition, for the configurations based on the information about the independent parameters configured for each type of DCI formats, different embodiments (e.g., the value of K set, the minimum AL (e.g., $AL_{N-RE<X}$, $AL_{N\_RE>=X}$, or the like), K selected AL type configurations, or K BD type configurations) may be applied based on the predetermined rule or relevant additional information that the eNB signals to the UE, depending on whether or not the number of REs available for EPDCCH transmission on one PRB pair is greater than or less than a predefined threshold ($X_{-th}$).

In addition, according to one embodiment of the present invention, the information about the BD allocation to each of K ALs which is applied according to each type of DCI formats may be respectively signaled to the UE by the eNB through an independent signal (e.g., a higher layer signal) predefined for each type of DCI formats, or may be configured such that the eNB transmits, to the UE, a single information applicable to multiple types of DCI formats and the UE differently applies the meaning of the single information according to each DCI format. In the case in which a single information applicable to multiple types of DCI formats, AL-specific BD number allocation information or configuration of splitting of BDs between the EPDCCH set may be pre-shared by the eNB and the UE according to each DCI format.

Additionally, the payload size (or the whole format bits) of the fallback TM mode-based DCIs (e.g., DCIs 0/1A) or the TM mode-based DCIs (e.g., DCIs 2/2A/2B/2C) may change depending on additional information and the size of the system bandwidth (for example, as the size of the system bandwidth increase, the number of bits for signaling the PRB position for PDSCH transmission increases), which are needed to support operation in a specific TM mode. For example, the blind decoding type/configuration allocated to the K AL types and K ALs selected according to at least one of the type of DCI formats, the system bandwidth, the information about the number of PRB pairs constituting an EPDCCH set, and the EPDCCH transmission type information about the EPDCCH set (e.g., the size of localized or distributed EPDCCH set). For example, if a DCI format (e.g., TM mode-based DCI) has a relatively large payload size, or the size of the system bandwidth is relatively large, a predetermined number of BDs may be allocated to the K relatively high ALs first. In this case, DCI transmission/reception may be efficiently performed. In another example, if a DCI format (e.g.,

fallback TM mode-based DCI) has a relatively small payload size, or the size of the system bandwidth is relatively small, a predetermined number of BDs may be allocated to the K relatively low ALs first. Thereby, efficient SS management may be implemented for multiple UEs.

According to one embodiment of the present invention, the same number of AL-specific BDs or different numbers of AL-specific BDs may be allocated to each DCI format depending on whether the predetermined number of BDs is allocated to K relatively high ALs first or K relatively low ALs first.

Herein, allocation of the same number of AL-specific BDs to each DCI format is defined as the following. When M ALs are used for EPDCCH transmission, if predefined K BD number types (i.e., $\{BD_1, BD_2,..., BD_{K-1}, BD_K\}$) are applied to only the predefined K ALs, the same predefined K BD number configurations are applied to the same K AL types between different DCI formats.

On the other hand, allocation of different numbers of AL-specific BDs according to DCI formats may be defined as the following. When M ALs are used for EPDCCH transmission, if K predefined BD number types (i.e., $\{BD_1, BD_2,..., BD_{K-1}, BD_K\}$) are applied to only the predefined K ALs, different K AL types and/or K BD number configurations are applied to different DCI formats, or whether to allocate a BD number to a specific AL is differently determined between different DCI formats. For example, whether to support a specific AL (e.g., a relatively low AL such as AL 1) is differently determined between different DCI formats. Further, the information for allocating the same or different AL-specific BDs according to the DCI formats may be implicitly determined according to a predefined rule or be signaled to the UE through a predefined signal (e.g., a higher layer signal or a physical layer signal) by the eNB.

According to one embodiment of the present invention, in the case in which the system bandwidth is narrow, and predefined BD numbers are allocated to K relatively low ALs first, the eNB may deliver corresponding information to the UE through a higher layer signal or according to a predefined rule such that the same AL-specific BD number configuration of BD configuration {6, 6, 2, 2, 0} for ALs {1, 2, 4, 8, 16} is applied to different DCI formats.

According to another embodiment of the present invention, it is assumed that the system bandwidth is wide, and predefined BD numbers are allocated to K relatively high ALs first. In this case, the eNB may deliver information to the UE through a higher layer signal or according to a predefined rule such that different K BD number configurations are applied to different DCI formats. For example, 'BD configuration {0, 8, 4, 2, 2} according to ALs {1, 2, 4, 8, 16}' may be applied to the fallback TM mode-based DCIs (e.g., DCI 0/1A), and 'BD configuration {0, 6, 6, 2, 2} according to AL {1, 2, 4, 8, 16}' may be applied to the TM mode-based DCIs (e.g., DCI 2/2A/2B/2C).

Alternatively, in the case in which whether to support a specific AL (i.e., AL 1) is differently determined between different DCI formats, 'BD configuration {4, 4, 4, 2, 2} according to ALs {1, 2, 4, 8, 16}' may be applied to the fallback TM mode-based DCIs (e.g., DCI 0/1A), and 'BD configuration {0, 6, 6, 2, 2} according to AL {1, 2, 4, 8, 16}' may be applied to the TM mode-based DCIs (e.g., DCI 2/2A/2B/2C).

Additionally, in the case in which multiple EPDCCH sets are configured, AL-specific BD numbers may be split between the multiple EPDCCH sets based on a predefined rule (e.g., equal splitting or unequal splitting).

According to another embodiment of the present invention, for a specific DCI format (e.g., a fallback TM mode-based DCI (e.g., DCI 0/1A)), the payload size of the specific DCI format may not change significantly when there is a change in the system bandwidth or the number of PRB pairs constituting an EPDCCH set. Accordingly, in this embodiment, even if predefined BD numbers are allocated to K relatively high ALs first, or relevant signaling is received, the specific DCI format whose payload size does not significantly change may be configured such that an AL-specific BD number is exceptionally allocated as in the case in which predefined BD numbers are allocated to K relatively low ALs first according to a predefined rule. Further, relevant information may be implicitly determined according to a predefined rule or be signaled to the UE through a predefined signal (e.g., a higher layer signal or a physical layer signal) by the eNB. Accordingly, even if the eNB signals, through a higher layer signal, to the UE that the predefined BD numbers are allocated to K relatively high ALs first, AL-specific BD number allocation in a manner that the predefined BD numbers are allocated to K relatively low ALs based on an exceptional rule in the case of a specific DCI format.

According to another embodiment of the present invention, when multiple EPDCCH sets are configured by the eNB, information such as AL-specific BD number allocation information applied to a specific DCI format may be selected according to a predefined rule based on a combination of combination information about numbers of PRB pairs constituting the respective EPDCCH sets, system bandwidth information, combination information about EPDCCH transmission types of the EPDCCH sets (e.g., localized or distributed EPDCCH set), type information about DCI formats which the UE monitors, and combination information about DCI format types which the UE monitors in each EPDCCH set (for example, signaling overhead related to transmission of AL-specific BD number allocation information may be reduced). Further, according to a combination of aforementioned multiple informations (i.e., combination information about numbers of PRB pairs constituting the respective EPDCCH sets, or system bandwidth information, combination information about EPDCCH transmission types of the EPDCCH sets, type information about DCI formats which the UE monitors, and combination information about DCI format types which the UE monitors in each EPDCCH set), AL-specific BD number allocation information irrespective of DCI formats, information for splitting AL-specific BD number allocation information allocated to the specific DCI format between multiple EPDCCH sets, or information for splitting AL-specific BD number allocation information allocated regardless of DCI formats between the multiple EPDCCH sets may be selected based on a predefined rule, in addition to the AL-specific BD number allocation information applied to a specific DCI format.

Further, AL-specific BD number allocation information, information split between the EPDCCH sets, or the like according to a DCI format in connection with a combination of some or all of the aforementioned informations (i.e., combination information about the numbers of PRB pairs constituting the respective EPDCCH sets, system bandwidth information, etc.) may be pre-shared (in the form of, for example, a table) between the eNB and the UE or be signaled to the UE by the eNB through a predefined signal (e.g., a higher layer signal or a physical layer signal). Alternatively, AL-specific BD number allocation information, information split between the EPDCCH sets, or the like may be pre-shared (in the form of, for example, a table) between the eNB and the UE or be signaled to the UE by the eNB through a predefined signal (e.g., a higher layer signal or a physical layer signal), regardless of the DCI format in connection with a combination of some or all of the aforementioned informations (i.e., combination information about the numbers of PRB pairs constituting the respective EPDCCH sets, system bandwidth information, etc.).

As an additional method, AL-specific BD number allocation information, information split between the EPDCCH sets, or the like according to a DCI format in connection with an information combination (e.g., combination information about the numbers of PRB pairs constituting multiple EPDCCH sets) of the aforementioned informations (i.e., combination information about the numbers of PRB pairs constituting the respective EPDCCH sets, system bandwidth information, etc.) may be differently applied according to at least one of the system bandwidth, combination information about EPDCCH transmission types of the respective EPDCCH sets, the type information about DCI formats which the UE monitors, and combination information about DCI format types which the UE monitors in each EPDCCH set. Further, the AL-specific BD number allocation information, information split between the EPDCCH sets, or the like may be differently applied according to at least one of the system bandwidth, combination information about EPDCCH transmission types of the respective EPDCCH sets, the type information about DCI formats which the UE monitors, and combination information about DCI format types which the UE monitors in each EPDCCH set, regardless of the DCI format in connection with an information combination of the aforementioned informations (i.e., combination information about the numbers of PRB pairs constituting the respective EPDCCH sets, system bandwidth information, etc.). Further, relevant information may be implicitly determined according to a predefined rule or be signaled to the UE by the eNB through a predefined signal (e.g., a higher layer signal).

The UE receives control information by monitoring EPDCCH candidates for a specific AL according to the embodiment described above (S1003),

The embodiments of the present invention described above may be applied to a case in which multiple EPDCCH-based component carriers (or cells) are used in the carrier aggregation (CA) environment and a case in which both EPDCCH-based component carriers (or cells) and legacy PDCCH-based component carriers (or cells) are used together in the CA environment. The embodiments of the present invention described above may also be applied to a case in which an EPDCCH-based extension carrier (without the legacy PDCCH region) is used in the CA environment.

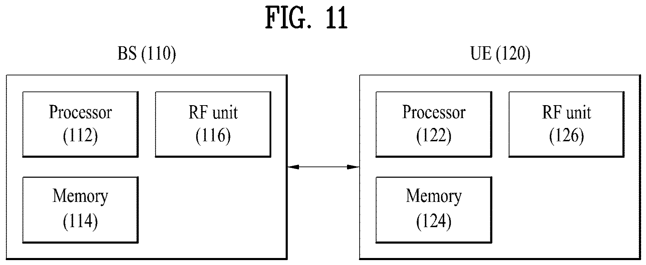

FIG. 11 illustrates a BS and a UE which are applicable to one embodiment of the present invention. If the wireless communication system includes a relay, communication on a backhaul link is performed between the BS and the relay, and communication on an access link is performed between the relay and the UE. Accordingly, the BS and the UE illustrated in the figure may be replaced with the relay according to situation.

Referring to FIG. 11, a wireless communication system includes a BS 110 and a UE 120. The BS 110 includes a processor 112, a memory 114, and a radio frequency (RF) unit 116. The processor 112 may be configured to implement the proposed processes and/or methods. The memory 114 is connected to the processor 112 to store various kinds of information related to operation of the processor 112. The RF unit 116 is connected to the processor 112 to transmit and/or receive a radio frequency signal. A UE 120 includes a processor 122, a memory 124, and an RF unit 126. The processor 122 may be configured to implement the proposed processes, and/or method. The memory 124 is connected to the processor 122 to store various kinds of information related to operation of the processor 122. The RF unit 126 is connected to the processor 122 to transmit and/or receive a radio frequency signal. The BS 110 and/or the UE 120 may have a single antenna or multiple antennas.

In the embodiments described above, elements and features of the present invention are combined in a predetermined form. The elements or features should be considered optional unless explicitly mentioned otherwise. Each of the elements or features can be implemented without being combined with other elements. In addition, some elements and/or features may be combined to configure an embodiment of the present invention. The sequence of the operations discussed in the embodiments of the present invention may be changed. Some elements or features of one embodiment may also be included in another embodiment, or may be replaced with elements or features from another embodiment. It is apparent that some claims for which the relationship of dependency therebetween is not explicitly stated may be combined to configure an embodiment or may be incorporated into a new claim through amendment after filing of this application.

Embodiments of the present invention may be implemented by various means such as, for example, hardware, firmware, software, or a combination thereof. When implemented by hardware, one embodiment of the present invention may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented by firmware or software, one embodiment of the present invention may be embodied as a module, a procedure, or a function that performs the functions or operations described above. Software code may be stored in a memory unit and executed by a processor. The memory unit is located at the interior or exterior of the processor and may transmit and receive data to and from the processor via various known means.

It is apparent to those skilled in the art that the present invention may be carried out in other specific ways than those set forth herein without departing from the characteristics of the present invention. Therefore, the above embodiments should be construed in all aspects as illustrative and not restrictive. The scope of the invention should be determined by the appended claims and their legal equivalents, and all changes coming within the meaning and equivalency range of the appended claims are intended to be embraced therein.

[Industrial Applicability]

A method and device for detecting downlink information in a wireless communication system according to embodiments of the present invention have been described above, mainly focusing on examples applied to a 3GPP LTE system. However, the embodiments of the present invention described above are also applicable to various wireless communication systems other than the 3GPP LTE system.

**Claims**

1. A method for detecting downlink control information at a user equipment, UE, (120) in a wireless communication system, the method comprising:

   receiving (S1001) a subframe for monitoring an enhanced physical downlink control channel, EPDCCH, indicated by a radio resource control, RRC, signaling; and
   monitoring (S1003) a search space related with the EPDCCH according to a pre-defined aggregation level set to detect a downlink control information transmission,
   wherein the pre-defined aggregation level set is determined according to a number of enhanced resource regions for transmission of the downlink control information,
   wherein the search space is configured based on the number of Enhanced Control Channel Elements, ECCEs, in an EPDCCH-physical resource block, EPDCCH-PRB, set of the subframe and the number of EPDCCH candidates to monitor according to the predetermined aggregation level set.

2. The method according to claim 1, wherein the number of enhanced resource regions is determined according to at least one of a downlink control information, DCI, format type, a system bandwidth, the number of resource elements, REs, available for EPDCCH transmission, the number of PRB pairs constituting an EPDCCH set, and EPDCCH transmission type information.

3. The method according to claim 1, wherein the pre-defined aggregation level set is determined to one of a first aggregation level set and a second aggregation level set, and wherein the number of resource regions for the first aggregation level set is defined to be less than the number of resource regions for the second aggregation level set.

4. The method according to claim 3, wherein a first aggregation level included in the first aggregation level set corresponds to a multiple value of a second aggregation level included in the second aggregation level set, and wherein the first aggregation level and the second aggregation level correspond a specific number of EPDCCH candidates configured for the search space.

5. The method according to claim 3,
   wherein a lowest aggregation level of the first aggregation level set is higher than a lowest aggregation level of the second aggregation level set.

6. The method according to claim 5, wherein the lowest aggregation level of the first aggregation level set is twice the lowest aggregation level of the second aggregation level set.

7. The method according to claim 5, wherein the first aggregation level set and the second aggregation level set are respective configured by a combination of at least one aggregation level selected from an aggregation level set configured as {1, 2, 4, 8, 16, 32}.

8. The method according to claim 5, wherein the number of the first aggregation level set is equal to the number of the second aggregation level set.

9. The method according to claim 1, wherein the pre-defined aggregation level set is defined such that a part of the number of EPDCCH candidate for the lowest aggregation level of the pre-defined aggregation level set is reallocated to the number of EPDCCH for remaining aggregation levels of the pre-defined aggregation level set.


**Patentansprüche**

1. Verfahren zum Erfassen von Abwärtsstrecken-Steuerinformationen an einem Benutzergerät, UE, (120) in einem drahtlosen Kommunikationssystem, wobei das Verfahren aufweist:

Empfangen (S1001) eines Teilrahmens zum Überwachen eines optimierten physikalischen Abwärtsstrecken-Steuerkanals, EPDCCH, der durch eine Funkressourcensteuerungs-, RRC,-Signalgebung angezeigt wird; und Überwachen (S1003) eines Suchraums bezüglich des EPDCCH gemäß einer vorbestimmten Aggregationsebenengruppe, um eine Abwärtsstreckenübertragung von Steuerinformationen zu erfassen, wobei die vordefinierte Aggregationsebene gemäß einer Anzahl von optimierten Ressourcengebieten zur Abwärtsstreckenübertragung von Steuerinformationen festgelegt wird, wobei der Suchraum basierend auf der Anzahl der optimierten Steuerkanalelemente, ECCEs, einer physikalischen EPDCCH-Ressourcenblock-, EPDCCH-PRB-Gruppe des Teilrahmens und der Anzahl der zu überwachenden EPDCCH-Kandidaten gemäß der vorbestimmten Aggregationsebenengruppe eingerichtet ist.

2. Verfahren nach Anspruch 1, wobei die Anzahl der optimierten Ressourcengebiete gemäß wenigstens einem von einem Abwärtsstrecken-Steuerinformations-, DCIs-Formattyp, einer Systembandbreite, der Anzahl der Ressourcenelemente, REs, die für die EPDCCH-Übertragung verfügbar sind, der Anzahl von PRB-Paaren, die eine EPDCCH-Gruppe bilden, und Informationen zum Typ der EPDCCH-Übertragung bestimmt wird.

3. Verfahren nach Anspruch 1, wobei die vordefinierte Aggregationsebenengruppe als eine von einer ersten Aggregationsebenengruppe und einer zweiten Aggregationsebenengruppe bestimmt wird, und wobei die Anzahl der Ressourcegebiete für die erste Aggregationsebenengruppe als kleiner definiert ist als die Anzahl der erfassten Gebiete für die zweite Aggregationsebenengruppe.

4. Verfahren nach Anspruch 3, wobei eine erste Aggregationsebene, die in der ersten Aggregationsebenengruppe enthalten ist, einem Vielfachen einer zweiten Aggregationsebene entspricht, die in der zweiten Aggregationsebenengruppe enthalten ist, und wobei die erste Applikationsebene und die zweite Aggregationsebene einer speziellen Anzahl von EPDCCH-Kandidaten entsprechen, die für diesen Suchraum eingerichtet sind.

5. Verfahren nach Anspruch 3, wobei eine unterste Aggregationsebene der ersten Aggregationsebenengruppe höher ist als eine unterste Aggregationsebene der zweiten Aggregationsebenengruppe.

6. Verfahren nach Anspruch 5, wobei die unterste Aggregationsebene der ersten Aggregationsebenengruppe zweimal die unterste Aggregationsebene der zweiten Aggregationsebenengruppe ist.

7. Verfahren nach Anspruch 5, wobei die erste Aggregationsebenengruppe und die zweite Aggregationsebenengruppe jeweils durch eine Kombination von wenigstens einer Aggregationsebene eingerichtet sind, die ausgewählt ist aus einer Aggregationsebenengruppe, die eingerichtet ist als {1, 2, 4, 8, 16, 32}.

8. Verfahren nach Anspruch 5, wobei die Anzahl der ersten Aggregationsebenengruppe gleich der Anzahl der zweiten Aggregationsebenengruppe ist.

9. Verfahren nach Anspruch 1, wobei die vordefinierte Aggregationsebenengruppe so definiert ist, dass ein Teil der Anzahl der EPDCCH-Kandidaten für die unterste Aggregationsstufe der vordefinierten Aggregationsebenengruppe erneut der Anzahl der EPDCCH für die restlichen Aggregationsebenen der vordefinierten Aggregationsebenengruppe zugewiesen wird.

**Revendications**

1. Procédé pour détecter des informations descendantes de contrôle au niveau d'un équipement utilisateur, UE (« user equipment »), (120) dans un système de communication sans fil, le procédé comprenant :

   recevoir (S1001) une sous-trame pour surveiller un canal physique descendante de contrôle amélioré, EPDCCH (« enhanced physical downlink control channel »), indiqué par une signalisation de contrôle de ressources radio, RRC (« radio resource control ») ; et
   surveiller (S1003) un espace de recherche lié à l'EPDCCH selon un ensemble de niveaux d'agrégation prédéfini pour détecter une transmission d'informations descendantes de contrôle,
   dans lequel l'ensemble de niveaux d'agrégation prédéfini est déterminé selon un nombre de régions de ressources améliorées pour la transmission des informations descendantes de contrôle,
   dans lequel l'espace de recherche est configuré sur la base du nombre d'éléments de canal de contrôle amélioré, ECCE (« enhanced control channel element »), dans un ensemble de blocs de ressources physiques EPDCCH, EPDCCH-PRB (« EPDCCH physical resource block »), de la sous-trame et du nombre de candidats EPDCCH à surveiller selon l'ensemble de niveaux d'agrégation prédéterminé.

2. Procédé selon la revendication 1, dans lequel le nombre de régions de ressources améliorées est déterminé selon au moins un élément parmi un type de format d'informations descendantes de contrôle, DCI (« downlink control information »), une largeur de bande de système, le nombre d'éléments de ressources, RE (« resource elements »), disponibles pour la transmission EPDCCH, le nombre de paires de PRB constituant un ensemble EPDCCH, et des informations de type de transmission EPDCCH.

3. Procédé selon la revendication 1, dans lequel l'ensemble de niveaux d'agrégation prédéfini est déterminé comme un ensemble parmi un premier ensemble de niveaux d'agrégation et un second ensemble de niveaux d'agrégation, et dans lequel le nombre de régions de ressources pour le premier ensemble de niveaux d'agrégation est défini comme étant inférieur au nombre de régions de ressources pour le second ensemble de niveaux d'agrégation.

4. Procédé selon la revendication 3, dans lequel un premier niveau d'agrégation inclus dans le premier ensemble de niveaux d'agrégation correspond à une valeur multiple d'un second niveau d'agrégation inclus dans le second ensemble de niveaux d'agrégation, et dans lequel le premier niveau d'agrégation et le second niveau d'agrégation correspondent à un nombre spécifique de candidats EPDCCH configurés pour l'espace de recherche.

5. Procédé selon la revendication 3, dans lequel un niveau d'agrégation le plus bas du premier ensemble de niveaux d'agrégation est supérieur à un niveau d'agrégation le plus bas du second ensemble de niveaux d'agrégation.

6. Procédé selon la revendication 5, dans lequel le niveau d'agrégation le plus bas du premier ensemble de niveaux d'agrégation est deux fois le niveau d'agrégation le plus bas du second ensemble de niveaux d'agrégation.

7. Procédé selon la revendication 5, dans lequel le premier ensemble de niveaux d'agrégation et le second ensemble de niveaux d'agrégation sont configurés respectivement par une combinaison d'au moins un niveau d'agrégation sélectionné parmi un ensemble de niveaux d'agrégation configuré comme {1, 2, 4, 8, 16, 32}.

8. Procédé selon la revendication 5, dans lequel le nombre du premier ensemble de niveaux d'agrégation est égal au nombre du second ensemble de niveaux d'agrégation.

9. Procédé selon la revendication 1, dans lequel l'ensemble de niveaux d'agrégation prédéfini est défini de sorte qu'une partie du nombre de candidats EPDCCH pour le niveau d'agrégation le plus bas de l'ensemble de niveaux d'agrégation prédéfini soit réallouée au nombre d'EPDCCH pour des niveaux d'agrégation restants de l'ensemble de niveaux d'agrégation prédéfini.

# FIG. 1

E-UMTS

# FIG. 2

(a) Control-plane protocol stack

(b) User-plane protocol stack

# FIG. 3

Initial cell search | Reception of system information | system information | General DL/UL Tx/Rx S308

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S301     S302     S303   S304    S305   S306     S307

- DL/UL ACK/NACK
- Report of UE CQI/PMI/rank using PUSCH and PUCCH

EP 2 884 678 B1

# FIG. 4

Radio frame

| #0 | #1 | #2 | ... | #18 | #19 |

Slot

Subframe

(a)

One radio frame, $T_S = 307200T = 10ms$

One half-frame, $T_S = 153600T = 5ms$

One slot
$T_{slot} = 15360T_S$

$30720T_S$

| Subframe#0 | | | | Subframe#2 | Subframe#3 | Subframe#4 | Subframe#5 | | | | Subframe#7 | Subframe#8 | Subframe#9 |

One subframe,
$30720T_S$

DwPTS    GP    UpPTS

DwPTS    GP    UpPTS

(b)

EP 2 884 678 B1

# FIG. 5

One downlink slot

7 OFDM symbols

Resource block
12×7 resource elements

Resource element

$N^{DL} \times 12$ subcarriers

12 subcarriers

# FIG. 6

Control region

Data region

First slot

First slot

Subframe

Frequency

Time

# FIG. 7

(a) 1TX or 2TX

(b) 4 TX

# FIG. 8

PDSCH region

E-PDCCH

PDSCH

E-PDCCH

PDSCH

PCFICH

PDCCH

3 OFDM symbols

# FIG. 9

Derive a probabilistically expected number of EPDCCH candidates of a specific aggregation level for a specific EPDCCH set — S901

Adjust the numbers of EPDCCH candidates if the sum of the derived numbers of EPDCCH candidates is less than the sum of the previously allocated numbers of EPDCCH candidates — S903

# FIG. 10

Receive aggregation level-related information for monitoring — S1001

Monitor EPDCCH candidates for a specific aggregation level — S1003

EP 2 884 678 B1

# FIG. 11

BS (110)                                    UE (120)

Processor (112)    RF unit (116)    Processor (122)    RF unit (126)

Memory (114)                        Memory (124)

32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012109542 A

**Non-patent literature cited in the description**

- **LG ELECTRONICS.** E-PDCCH Search Space Configuration. *3GPP Draft; R1-121455*
- **HTC.** Discussion on ePDCCH Search Space Design. *3GPP Draft; R1-123600*
- **ALCATEL-LUCENT SHANGHAI BELL.** ePDCCH search space design and aggregation levels. *3GPP Draft; R1-123150*